# EUROPEAN PATENT SPECIFICATION

(11) **EP 0 958 315 B1**
(45) Date of publication and mention of the grant of the patent: **27.06.2001**
(21) Application number: 98908040.3
(22) Date of filing: 02.02.1998
(51) Int. Cl.: C08G 18/81, C08G 18/48, C08F 299/06, G02B 1/04

(54) **MOULDED OPHTHALMIC ARTICLE**
GEGOSSENE OPHTALMISCHE GEGENSTÄNDE
ARTICLE OPHTALMIQUE MOULE

(30) Priority: 04.02.1997 EP 97810056
(43) Date of publication of application: 24.11.1999
(73) Proprietor: Novartis AG, 4058 Basel (CH); Novartis-Erfindungen Verwaltungsgesellschaft m.b.H., 1235 Wien (AT)
(72) Inventor: STEINMANN, Bettina, CH-1724 Praroman-Le Mouret (CH)
(74) Representative: Becker, Konrad
(86) International application number: EP9800547
(87) International publication number: WO9833834

(56) References cited:
- EP-A- 0 379 462
- EP-A- 0 537 877
- EP-A- 0 579 503

## Description

The present invention relates to specific branched polyurethane (meth)acrylates, processes for the production thereof, and moulded ophthalmic articles containing them, especially contact lenses.

Polymerisable urethane resins containing inorganic fillers; which are the reaction product of an ethylenically unsaturated polyisocyanate component with an ethylenically unsaturated polyol, and the thermal crosslinking of them into moulded articles, are already known e.g. from JP-A-3-210317. In addition, polymerisable resins which are the addition product of an unsaturated isocyanate with an amino-group-containing urethane are known e.g. from JP-A-7-292046. EP-A-0537877 discloses macromers which are obtainable e.g. by reacting a compound, which may be obtained from an ethylenically unsaturated isocyanate, a polyalkylene glycol and a diisocyanate, and which still has a free isocyanate group at its disposal, with a sugar derivative whose hydroxy groups are at least partly alkoxylated with an alkylene oxide, and also ophthalmic lenses that are obtainable from these macromers by crosslinking.

Now, surprisingly, new branched polyurethane (meth)acrylates have been found, which can be crosslinked in a particularly simple manner, e.g. directly from aqueous solution or solvent-free, to form moulded ophthalmic articles, such as contact lenses.

The present invention relates to ophthalmic mouldings, which are obtainable by crosslinking a prepolymer which is the copolymerisation product of
(a) at least one polyalkylene glycol of formula

   HO-(CH₂-CH₂-O)ₙ-(CHY₁-CHY₂-O)ₘ-(CHY₃-CHY₄-O)ₚ-H (1)

   or

   HO-[(CH₂-CH₂-CH₂-CH₂-O-]_{q}-H (1'),

   wherein one of radicals Y₁ and Y₂ signifies methyl and the other signifies hydrogen, one of radicals Y₃ and Y₄ is ethyl and the other is hydrogen, q is a number from 1 to 50, and n, m and p, independently of one another, are each a number from 0 to 100, wherein the sum of (n+m+p) is 5 to 100,
(b) at least one polyhydroxy compound selected from the group consisting of
   (i) a linear or branched aliphatic polyhydroxy compound of formula

      R₁-(OH)ₓ (2),

      wherein R₁ is the radical of a multi-functional linear or branched aliphatic alcohol and x is a number ≥ 3,
   (ii) a polyether polyol, which is the polymerisation product of a compound of formula (2) and a glycol,
   (iii) a polyester polyol, which is the polymerisation product of a compound of formula (2), a dicarboxylic acid or a derivative thereof and a diol, and
   (iv) a cycloaliphatic polyol selected from the group consisting of a C₅-C₈-cycloalkane, which is substituted by ≥ 3 hydroxy groups, and an unsubstituted mono- and disaccharide,
(c) at least one di- or polyisocyanate of formula

   R₂-(NCO)_{y} (3)

   wherein R₂ is the radical of an aliphatic, cycloaliphatic, aliphatic-cycloaliphatic, aromatic or araliphatic di- or polyisocyanate and y is a number from 2 to 6,
(d) at least one ethylenically unsaturated monoisocyanate of formula 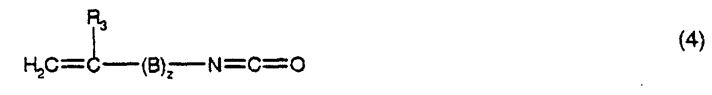 or an ethylenically unsaturated acid halide of formula 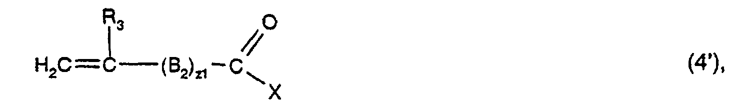 wherein R₃ is hydrogen or methyl, z and z1 independently of one another signify the number 0 or 1, B signifies C₁-C₆-alkylene, or phenylene or C₇-C₁₂-aralkylene which is each unsubstituted or substituted by C₁-C₄-alkyl or C₁-C₄-alkoxy, or a radical of formula 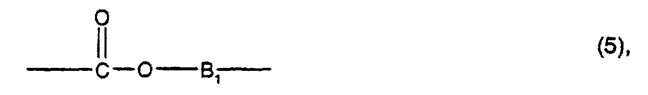 B₁ signifies linear or branched C₂-C₁₂-alkylene which is optionally interrupted by one or more oxygen atoms, B₂ is C₁-C₆-alkylene and X signifies halogen,
and optionally one or more further copolymerisable monomers, in the absence or presence of an additional vinylic comonomer.

In formula (1), n, m and p, independently of one another, preferably each denote a number from 0 to 50, whereby the sum of (n+m+p) is 8 to 50. Most preferably, n, m and p, independently of one another, each denote a number from 0 to 25, whereby the sum of (n+m+p) is 9 to 25. In formula (1'), q preferably signifies a number from 1 to 20.

The polyalkylene glycol according to (a) is e.g. a polyethylene glycol, polypropylene glycol, polyethylene glycol / polypropylene glycol block polymer, polyethylene glycol / polypropylene glycol / polybutylene glycol block polymer or a polytetrahydrofuran.

Preferred embodiments of the polyalkylene glycol according to (a) are represented by:
(i) compounds of formula (1), wherein p is 0, n and m, independently of one another, are each a number from 0 to 100, preferably 0 to 50, and most preferably 0 to 25, and the sum of (n+m) is 5 to 100, preferably 8 to 50, most preferably 9 to 25;
(ii) compounds of formula (1), wherein p and m are each 0 and n signifies a number from 5 to 100, preferably 8 to 50, most preferably 9 to 25.

R₁ in formula (2) signifies e.g. the radical of an aliphatic polyol with 2 to 18, preferably 3 to 12, most preferably 3 to 8 carbon atoms. The variable x preferably signifies a number from 3 to 12, preferably a number from 3 to 8, most preferably a number from 3 to 6, and particularly preferably the number 3.

Examples of suitable polyhydroxy compounds of formula (2) are glycerol, diglycerol, triglycerol, 1,1,1-trishydroxymethylethane, 1,1,1-trishydroxymethylpropane, 1,2,4-butanetriol, 1,2,6-hexanetriol, erythritol, pentaerythritot, di- or tripentaerythritol, arabitol, sorbitol, disorbitol or mannitol and mixtures thereof. Preferred compounds of formula (2) are glycerol, 1,1,1-tris-hydroxymethylpropane, 1,2,4-butanetriol, erythritol, pentaerythritol, arabitol or sorbitol. A group of especially preferred compounds of formula (2) comprises glycerol, 1,1,1-trihydroxymethylpropane and pentaerythritol.

Further suitable as a polyhydroxy compound according to (b) are reaction products of the above-mentioned polyhydroxy compounds of formula (2) with a dicarboxylic acid or with a derivative of a dicarboxylic acid, e.g. a dicarboxylic acid anhydride, ester or halide, as well as a diol, whereby oligomeric polyester polyols are obtained, or reaction products of the above-mentioned polyhydroxy compounds with a glycol, whereby oligomeric polyether polyols are obtained.

If the polyhydroxy compound according to (b) in question is a polyester polyol, then this is preferably an oligomeric reaction product of a compound of formula (2), wherein the above-mentioned meanings and preferences apply, with an aliphatic or cycloaliphatic dicarboxylic acid having 3 to 12 carbon atoms, or an aromatic dicarboxylic acid having 5 to 15 carbon atoms, or an appropriate derivative thereof, e.g. a corresponding dicarboxylic acid anhydride, ester or halide, as well as a diol as chain extender. Examples of suitable dicarboxylic acids are malonic acid, succinic acid, 2,2-dimethylsuccinic acid, glutaric acid, adipic acid, pimelic acid, sebacic acid, tetrahydrophthalic acid, hexahydrophthalic acid, phthalic acid, isophthalic acid, terephthalic acid, maleic acid or fumaric acid, as well as the corresponding dicarboxylic acid esters, halides or anhydrides. Appropriate diols are e.g. linear or branched C₂-C₂₀-alkyl-diols; compounds of the above-mentioned formula (1), wherein Y₁ and Y₂ have the above-mentioned meanings, p is 0, m and n, independently of one another, each signify a number from 0 to 10, and the sum of (n+m) is 3 to 10; as well as aromatic-aliphatic diols with 7 to 20 C-atoms.

If the polyhydroxy compound according to (b) in question is a polyether polyol, then this is preferably a short-chained polymerisate consisting of a compound of formula (2), wherein the above-mentioned significances and preferences apply, and ethylene glycol, propylene glycol or a mixture thereof.

The above-described polyester polyols and polyether polyols are available commercially, e.g. as Desmophen® types, e.g. as Desmophen® 650, 670, 550U, 250U.

If the polyhydroxy compound according to (b) in question is a cycloaliphatic polyol, then this may be e.g. cyclopentane or preferably a cyclohexane, which is respectively substituted by 3 to 5 and preferably by 3 or 4 hydroxy groups and bears no further substituents or hetero atoms. Further suitable cycloaliphatic polyols according to (b) are represented by unsubstituted mono- or disaccharides, e.g. glucose, fructose, mannose, galactose, maltose, lactose or saccharose.

In formula (3), R₂ signifies e.g. the radical of a linear or branched aliphatic polyisocyanate with 3 to 24 C-atoms, the radical of a cycloaliphatic or aliphatic-cycloaliphatic polyisocyanate with 3 to 24 C-atoms, or the radical of an aromatic or araliphatic polyisocyanate with 6 to 24 C-atoms. The variable y preferably signifies a number from 2 to 4, most preferably the number 2.

The polyisocyanate according to (c) in question is preferably a diisocyanate of formula

OCN-R₂-NCO, (3a),

wherein R₂ signifies linear or branched C₃-C₁₈-alkylene, or unsubstituted or C₁-C₄-alkyl-substituted or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene.

R₂ as alkylene preferably signifies a linear or branched C₃-C₁₈-alkylene radical, more preferably a linear or branched C₄-C₁₂-alkylene radical, and most preferably a linear or branched C₆-C₁₀-alkylene radical. A few preferred alkylene radicals are 1,4-butylene, 2,2-dimethyl-1,4-butylene, 1,5-pentylene, 2,2-dimethyl-1,5-pentylene, 1,6-hexylene, 2,2,3- or 2,2,4-trimethyl-1,5-pentylene, 2,2-dimethyl-1,6-hexylene, 2,2,3-or 2,2,4- or 2,2,5-trimethyl-1,6-hexylene, 2,2-dimethyl-1,7-heptylene, 2,2,3- or 2,2,4-or 2,2,5- or 2,2,6-trimethyl-1,7-heptylene, 1,8-octylene, 2,2-dimethyl-1,8-octylene or 2,2,3- or 2,2,4- or 2,2,5- or 2,2,6- or 2,2,7-trimethyl-1,8-octylene.

If R₂ is arylene, this is preferably naphthylene and most preferably phenylene. If the arylene is substituted, a substituent is preferably located in ortho position to an isocyanate group. Examples of substituted arylene are 1-methyl-2,4-phenylene, 1,5-dimethyl-2,4-diphenylene, 1-methoxy-2,4-phenylene or 1-methyl-2,7-naphthylene.

R₂ as aralkylene is preferably naphthylalkylene and most preferably phenylalkylene. The alkylene group in aralkylene preferably contains 1 to 12, most preferably 1 to 6 and particularly preferably 1 to 4 C-atoms. The alkylene group in aralkylene is most particularly methylene or ethylene. A few examples are 1,3- or 1,4-benzylene, naphth-2-yl-7-methylene, 6-methyl-1,3- or -1,4-benzylene, 6-methoxy-1,3- or -1,4-benzylene.

If R₂ is cycloalkylene, it is preferably C₅-C₆-cycloalkylene and most preferably cyclohexylene which is respectively unsubstituted or methyl-substituted. A few examples are 1,3-cyclobutylene, 1,3-cyclopentylene, 1,3- or 1,4-cyclohexylene, 1,3-or 1,4-cycloheptylene, 1,3- or 1,4- or 1,5-cyclooctylene, 4-methyl-1,3-cyclopentylene, 4-methyl-1,3-cyclohexylene, 4,4-dimethyl-1,3-cyclohexylene, 3-methyl- or 3,3-dimethyl-1,4-cyclohexylene, 3,5-dimethyl-1,3-cyclohexylene, 2,4-dimethyl-1,4-cyclohexylene.

If R₂ signifies cycloalkylene-alkylene, it is preferably cyclopentylene-C₁-C₄-alkylene, and especially cyclohexylene-C₁-C₄-alkylene, which is respectively unsubstituted or substituted once or several times by C₁-C₄-alkyl, especially methyl. The group cycloalkylene-alkylene preferably denotes cyclohexylene-ethylene and most preferably denotes cyclohexylene-methylene, which is respectively unsubstituted in the cyclohexylene radical or substituted by 1 to 3 methyl groups. A few examples are cyclopent-1-yl-3-methylene, 3-methyl-cyclopent-1-yl-3-methylene, 3,4-dimethylcyclopent-1-yl-3-methylene, 3,4,4-trimethyl-cyclopent-1-yl-3-methylene, cyclohex-1-yl-3- or -4-methylene, 3- or 4- or 5-methyl-cyclohex-1-yl-3- or -4-methylene, 3,4- or 3,5-dimethyl-cyclohex-1-yl-3- or -4-methyiene, 3,4,5- or 3,4,4- or 3,5,5-trimethyl-cyclohex-1-yl-3- or -4-methylene.

If R₂ signifies alkylene-cycloalkylene-alkylene, it is preferably C₁-C₄-alkylene-cyclopentylene-C₁-C₄-alkylene and especially C₁-C₄-alkylene-cyclohexylene-C₁-C₄-alkylene, which is respectively unsubstituted or substituted once or several times by C₁-C₄-alkyl, most preferably methyl. The group alkylene-cycloalkylene-alkylene preferably denotes ethylene-cyclohexyleneethylene and most preferably methylene-cyclohexylene-methylene, which is respectively unsubstituted in the cyclohexylene radical or substituted by 1 to 3 methyl groups. A few examples are cyclopentane-1,3-dimethylene, 3-methyl-cyclopentane-1,3-dimethylene 3,4-dimethyl-cyclopentane-1,3-dimethylene, 3,4,4-trimethyl-cyclopentane-1,3-dimethylene, cyclohexane-1,3- or -1,4-dimethylene, 3- or 4- or 5-methyl-cyclohexane-1,3- or -1,4-dimethylene, 3,4- or 3,5-dimethyl-cyclohexane-1,3- or -1,4-dimethylene, 3,4,5- or 3,4,4- or 3,5,5-trimethyl-cyclohexane-1,3- or -1,4-dimethylene.

When R₂ is C₃-C₈-cycloalkylene-C₁-C₂-alkylene-C₃-C₈-cycloalkylene or C₆-C₁₀-arylene-C₁-C₂-alkylene-C₆-C₁₀-arylene it is preferably C₅-C₆-cycloalkylene-methylene-C₅-C₆-cycloalkylene or phenylene-methylene-phenylene, which may respectively be unsubstituted in the cycloalkyl or phenyl ring or substituted by one or more methyl groups.

The radical R₂ in formula (3a) has symmetrical or asymmetrical structure.

One preferred group of polyisocyanates according to (c) comprises compounds of formula (3a), wherein R₂ signifies linear or branched C₆-C₁₀-alkylene, cyclohexylene-methylene or cyclohexylene-methylene-cyclohexylene which are either unsubstituted or substituted in the cyclohexyl moiety by 1 to 3 methyl groups, or phenylene or phenylene-methylene-phenylene which are either unsubstituted or substituted in the phenyl moiety by methyl.

Examples of especially preferred polyisocyanates of formula (3) or (3a) according to (c) are isophorone diisocyanate (IPDI), toluylene-2,4-diisocyanate (TDI), methylenebis(cyclohexylisocyanate), 1,6-diisocyanato-2,2,4-trimethyl-n-hexane (TMDI), methylenebis(phenylisocyanate) or hexamethylene-diisocyanate (HMDI).

In formulae (4) and (4'), R₃, independently of one another, each signify hydrogen or preferably methyl.

The variable z is e.g. the number 0 or preferably the number 1. The variable z1 signifies e.g. the number 1 and preferably the number 0.

When B and B₂ are alkylene, they are each, independently of one another, e.g. 1-methyl- or 1,1-dimethyl-methylene, 1,2-ethylene, 1,2- or 1,3-propylene, 2-methyl-propylene or 1,2-, 1,3-, 1,4- or 2,3-butylene, 2,2-dimethyl-1 ,3-propylene, 2-methyl- or 2,3-dimethyl-1,4-butylene, 1,2-, 1,3-, 1,4- or 1,5-pentylene, 2-methyl- or 3-methyl- or 4-methylpentylene or 1,2-, 1,3-, 1,4-, 1,5-or 1,6-hexylene. B and B₂ as alkylene are each, independently of one another, preferably C₁-C₄-alkylene and most preferably methylene.

When B is a phenylene radical, it is e.g. 1,2-, 1,3- or 1,4-phenylene either unsubstituted or substituted by methyl or methoxy. B as a phenylene radical is preferably 1,3- or 1,4-phenylene.

When B is an aralkylene radical, it is e.g. benzyiene which is either unsubstituted or substituted by methyl or methoxy, whereby the methylene group is respectively bonded to nitrogen isocyanate. B as an aralkylene radical is preferably the 1,3- or 1,4-phenyienemethylene radical, whereby the methylene group is respectively bonded to the nitrogen isocyanate.

If B signifies a radical of the above-mentioned formula (5), then B₁ as alkylene may be e.g. one of the C₂-C₁₂-alkylene radicals already mentioned for R₂ or B.

Examples of B₁ as alkylene which is interrupted by oxygen atoms are -CH₂CH₂-O-CH₂CH₂-, -CH₂CH₂-O-CH₂CH₂-O-CH₂CH₂-, -CH₂CH₂-O-CH₂CH₂-O-CH₂CH₂-O-CH₂CH₂-, -CH(CH₃)CH₂-O-CH(CH₃)CH₂-, -CH(CH₃)CH₂-O-CH₂CH₂-, -CH(C₂H₅)CH₂-O-CH₂CH₂-, -CH(C₂H₅)CH₂-O-CH(C₂H₅)CH₂- or -CH₂CH₂CH₂CH₂-O-CH₂CH₂CH₂CH₂-.

B₁ preferably signifies linear or branched C₂-C₈-alkylene, most preferably linear C₂-C₈-alkylene, and particularly preferably linear C₂-C₄-alkylene. In a preferred embodiment of the invention, B₁ signifies 1,2-ethylene.

B preferably signifies a radical of the above-mentioned formula (5), wherein for the variable B₁ contained therein, the above-mentioned meanings and preferences apply.

X signifies e.g. bromine or preferably chlorine.

Compounds of formula 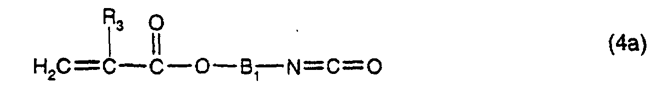 or 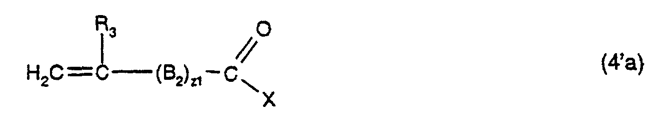 wherein R₃ is hydrogen or methyl, B₁ signifies linear or branched C₂-C₈-alkylene, B₂ is C₁-C₄-alkylene, z1 signifies the number 0 or 1 and X represents halogen, are preferred as component (d) of the prepolymers according to the invention.

Compounds of the above-mentioned formulae (4'a) or especially (4a), wherein R₃ is hydrogen or methyl, B₁ is linear or branched C₂-C₄-alkylene, z1 is the number 0 and X represents bromine or chlorine, are especially preferred as component (d) of the prepolymers according to the invention.

If, in order to produce the prepolymers used according to the invention, further copolymerisable monomers are used as well as components (a) - (d) mentioned above, then these may be in principle all monomers that can form copolymers with di- or poly-isocyanates or di- or polyhydroxy compounds, for example further hydroxy compounds, e.g. ethylenically unsaturated monohydroxy compounds such as 2-hydroxyethyl acrylate or 2-hydroxyethyl methacrylate. However, it is preferable if no further comonomers are used in the production of the prepolymers according to the invention, apart from the said components (a) - (d).

One preferred embodiment of the prepolymers used according to the invention relates to those which are the polymerisation product of
(a) one or more polyalkylene glycols of formula

   HO-(CH₂-CH₂-O)ₙ-(CHY₁-CHY₂-O)ₘ-H (1a),

   wherein one of radicals Y₁ and Y₂ signifies methyl and the other radical signifies hydrogen,
   and n and m, independently of one another, each denote a number from 0 to 50,
   wherein the sum of (n+m) is 8 to 50,
(b) one or more linear or branched aliphatic polyhydroxy compounds of formula

   R₁-(OH)ₓ (2)

   wherein R₁ is the radical of a multi-functional aliphatic alcohol and x is a number from 3 to 8,
(c) one or more diisocyanates of formula

   OCN-R₂-NCO (3a),

   wherein R₂ signifies linear or branched C₃-C₁₈-alkylene or unsubstituted or C₁-C₄-alkyl-substituted or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene, and
(d) one or more ethylenically unsaturated compounds of formula 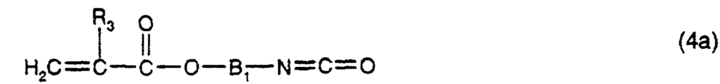 or 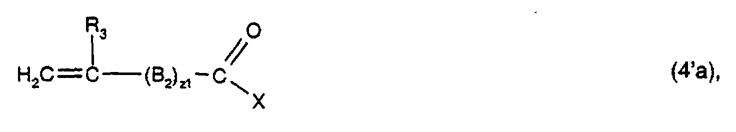 wherein R₃ is hydrogen or methyl, B₁ signifies linear or branched C₂-C₈-alkylene, B₂ is C₁-C₄-alkylene, z1 signifies the number 0 or 1 and X represents halogen.

An especially preferred embodiment of the prepolymers used according to the invention relates to those which are the polymerisation product of
(a) one or more polyalkylene glycols of formula

   HO-(CH₂-CH₂-O)ₙ-(CHY₁-CHY₂-O)ₘ-H (1a),

   wherein one of radicals Y₁ and Y₂ signifies methyl and the other radical signifies hydrogen,
   and n and m, independently of one another, each denote a number from 0 to 25,
   wherein the sum of (n+m) is 9 to 25,
(b) one or more polyhydroxy compounds selected from the group consisting of glycerol, diglycerol, triglycerol, 1,1,1-trishydroxymethylethane, 1,1,1-trishydroxymethylpropane, 1,2,4-butanetriol, 1,2,6-hexanetriol, erythritol, pentaerythritol, di- and tripentaerythritol, arabitol, sorbitol, disorbitol and mannitol and mixtures thereof,
(c) a diisocyanate of formula

   OCN-R₂-NCO (3a),

   wherein R₂ signifies linear or branched C₆-C₁₀-alkylene, cyclohexylene-methylene or cyclohexylene-methylene-cyclohexylene either unsubstituted or substituted in the cyclohexyl moiety by 1 to 3 methyl groups, or phenylene or phenylene-methylene-phenylene either unsubstituted or substituted in the phenyl moiety by methyl, and
(d) an ethylenically unsaturated compound of the above-mentioned formula (4a), wherein R₃ denotes hydrogen or methyl and B₁ signifies linear or branched C₂-C₄alkylene.

The prepolymers which are the copolymerisation product consisting of the above-mentioned components (a), (b), (c) and (d), whereby the above-mentioned meanings and preferences apply, are new and represent a further object of the invention.

The prepolymers according to the invention may be produced e.g. whereby the above-mentioned components (a), (b), (c) and (d) and optionally further copolymerisable monomers are reacted together in any sequence in an inert solvent at a temperature of e.g. -5°C to 150° C.

Suitable inert solvents are aprotic, preferably polar solvents, for example hydrocarbon halides (chloroform, methylene chloride, trichloroethane, tetrachloroethane, chlorobenzene), ethers (tetrahydrofuran, dioxane), ketones (acetone, ethyl methyl ketone, dibutyl ketone, methyl isobutyl ketone), carboxylic acid esters and lactones (ethyl acetate, butyrolactone, valerolactone), alkylated carboxylic acid amides (N,N-dimethylacetamide, N-methylpyrrolidone), nitriles (acetonitrile), sulphones and sulphoxides (dimethyl sulphoxide, tetramethylene sulphone). Polar solvents are preferably employed.

If the prepolymer consists of components (a), (b), (c) and (d), the reactants are employed e.g. in quantities of

| | |
|---|---|
| 1 | OH equivalent of component (a), |
| 0.05 - 1 | OH equivalents of component (b), |
| 0.5 - 1.95 | NCO equivalents of component (c), and |
| 0.1 - 2 | NCO or acid halide equivalents of component (d). |

It is preferable to produce prepolymers by using

| | |
|---|---|
| 1 | OH equivalent of component (a), |
| 0.1 - 0.8 | OH equivalents of component (b), |
| 0.6 - 1.5 | NCO equivalents of component (c), and |
| 0.1 - 1.5 | NCO or acid halide equivalents of component (d). |

It is especially preferable to produce prepolymers by using

| | |
|---|---|
| 1 | OH equivalent of component (a), |
| 0.2 - 0.5 | OH equivalents of component (b), |
| 0.8 -1.4 | NCO equivalents of component (c), and |
| 0.1-1 | NCO or acid halide equivalents of component (d). |

The stoichiometry is advantageously chosen so that the sum of OH equivalents of components (a) and (b) is greater than the number of NCO equivalents of component (c). It is further preferred for the sum of OH equivalents of components (a) and (b) to be equal to or greater than, preferably approximately equal to, the sum of NCO and acid halide equivalents of components (c) and (d).

Components (a) - (d) are all known compounds or compound mixtures, or may be obtained in accordance with methods known *per se*.

The reaction temperature is e.g. -5°C to 150°C, preferably 0 to 100°C, most preferably 0 to 80° C, and particularly preferably 15 to 50°C. Furthermore, it is preferable for the reaction of the hydroxy-group-containing components (a) and (b) with the isocyanate-group-containing components (c) and (d) to be carried out in the presence of a catalyst. Suitable catalysts are for example metal salts such as alkali metal salts or tin salts of organic carboxylic acids, or tertiary amines, for example (C₁-C₆-alkyl)₃N (triethylamine, tri-n-butylamine), N-methylpyrrolidine, N-methylmorpholine, N,N-dimethylpiperidine, pyridine and 1,4-diazabicyclooctane. Tin salts have proved to be particularly effective, especially alkyl-tin salts of carboxylic acids, for example dibutyl tin dilaurate and tin dioctoate.

The catalyst is employed in the reaction e.g. in a molar ratio of 1:10 to 1:1000, preferably 1:50 to 1:750, most preferably ca. 1:100 to 1:500, respectively based on component (a).

The reaction times may vary within a broad range, whereby progress of the reaction can be followed well by monitoring the reduction of the isocyanate content in the reaction mixture. As a rule, reaction times of 1 to 24 hours, preferably 4 to 16 hours, are sufficient to achieve a complete reaction.

Isolation and purification of the produced compounds are effected by known processes, for example extraction, crystallisation, recrystallisation, ultrafiltration or by chromatographic purification methods. The compounds are obtained in high yields and high purity.

It is advantageous to react a mixture of the above-mentioned components (a) and (b) either with a mixture of components (c) and (d) or preferably first of all with component (c) and then with component (d).

One preferred embodiment of the present invention relates to a process for the production of prepolymers, which is characterised in that a mixture of components (a) and (b) is firstly allowed to react with component (c), and afterwards is reacted without intermediate isolation with component (d), as well as the prepolymers obtainable in this way.

A further preferred embodiment of the present invention relates to a process for the production of crosslinkable prepolymers, which is characterised in that a mixture of 1 OH equivalent of component (a) and 0.05 to 1 OH equivalents of component (b) is reacted in an inert solvent at a temperature of 0 to 100°C in the presence of a catalyst either with a mixture of 0.5 to 1.95 NCO equivalents of a component (c) and 0.1 to 2 NCO or acid halide equivalents of a component (d) or first of all with 0.5 to 1.95 NCO equivalents of a component (c) and then with 0.1 to 2 NCO or acid halide equivalents of a component (d), wherein for components (a), (b), (c) and (d) the above-mentioned meanings and preferences apply, as well as the crosslinkable prepolymers obtainable by the process.

An especially preferred embodiment of the present invention relates to a process for the production of crosslinkable prepolymers, which is characterised in that a mixture of 1 OH equivalent of component (a) and 0.1 to 0.8 OH equivalents of component (b) is reacted, in an inert solvent at a temperature of 0 to 80°C, in the presence of a catalyst selected from the group of metal salts of organic carboxylic acids and tertiary amines, first of all with 0.6 to 1.5 NCO equivalents of component (c) and then with 0.1 to 1.5 NCO or acid halide equivalents of a component (d), wherein for components (a), (b), (c) and (d) the above-mentioned meanings and preferences apply, as well as the crosslinkable prepolymers obtainable by the process.

The prepolymers according to the invention are crosslinkable, but uncrosslinked or at least substantially uncrosslinked; nevertheless, they are stable, i.e. spontaneous crosslinking due to homopolymerisation does not take place.

The crosslinkable prepolymers which are obtainable by means of polymerisation of components (a) - (d), and optionally further copolymerisable monomers, are advantageously liquid or readily meltable or water-soluble; the prepolymers which are water-soluble are preferred in particular. The average molecular weight of the prepolymers according to the invention may vary within a broad range. An average molecular weight of e.g. 1000 to 50,000 has proved to be advantageous for the prepolymers according to the invention. Furthermore, the prepolymers according to the invention may be purified in a manner known *per se*, for example by precipitation with acetone, dialysis or ultrafiltration, whereby ultrafiltration is preferred in particular. As a result of this purification procedure, the prepolymers according to the invention may be obtained in extremely pure form, e.g. as solvent-free liquids or melts or as concentrated aqueous solutions, which are free from or at least substantially free from reaction products such as salts, and from starting materials or other non-polymeric constituents.

The preferred purifiying process for the prepolymers according to the invention, ultrafiltration, may be carried out in a manner known *per se*. Thus, it is possible to carry out ultrafiltration repeatedly, for example two to ten times. Alternatively, ultrafiltration may also be carried out continuously, until reaching the desired degree of purity. The desired degree of purity may be basically selected at any level, and is preferably set so that the content of undesired constituents in the prepolymers is e.g. ≤ 0.001%, most preferably ≤ 0.0001% (1 ppm). As a result of their synthesis, the prepolymers may additionally contain constituents which are acceptable from a physiological point of view, e.g. sodium chloride, whereby such constituents are advantageously present in an amount of ≤ 1%, preferably ≤ 0.1%, most preferably ≤ 0.01%.

As already mentioned above, the prepolymers according to the invention may be crosslinked in an extremely effective and well-directed manner, in particular by photo-crosslinking. Crosslinking may take place in the presence or preferably in the absence of an additional vinylic comonomer. The crosslinked polymers are insoluble in water.

In the case of photo-crosslinking, a photo-initiator is suitably added which can initiate radical crosslinking. Examples of these are familiar to the person skilled in the art, and suitable photoinitiators which may be mentioned in particular are benzoin-methylether, 1-hydroxycyclohexylphenylketone, Darocure® 1173 or Irgacure® types. Crosslinking may be commenced by actinic radiation, e.g. UV light, or by ionised radiation, e.g. gamma rays or X-rays.

Photopolymerisation may also be carried out without adding a solvent, e.g. if the prepolymer is a liquid or readily meltable prepolymer, or it takes place in a suitable solvent. Suitable solvents are basically all solvents that dissolve the polymers according to the invention and the optionally additionally employed vinylic comonomers, e.g. water, alcohols such as lower alkanols, e.g. ethanol or methanol, furthermore carboxylic acid amides, such as dimethylformamide, or dimethyl sulphoxide, and likewise mixtures of suitable solvents, e.g. mixtures of water with an alcohol, such as a water/ethanol or a water/methanol mixture.

Photo-crosslinking is preferably effected whilst solvent-free or essentially solvent-free or directly from an aqueous solution of the prepolymers according to the invention, which may be obtained as the result of the preferred purification step, ultrafiltration, optionally after adding an additional vinylic comonomers. For example, photo-crosslinking may be undertaken from a 15 to 90% aqueous solution.

The process for the production of the crosslinked polymers according to the invention can be characterised e.g. in that a prepolymer, which is a polymerisation product obtainable as described above from components (a), (b), (c) and (d) and optionally further copolymerisable monomers, especially in substantially pure form, i.e, for example after ultrafiltration once or several times, is photo-crosslinked whilst solvent-free or substantially solvent-free or in solution, especially in aqueous solution, in the presence or preferably in the absence of an additional vinylic comonomer, preferably using a photoinitiator.

The vinylic comonomer which may be additionally used for photo-crosslinking in accordance with the invention may be hydrophilic, hydrophobic or may be a mixture of a hydrophobic and a hydrophilic vinylic monomer. Suitable vinylic monomers include especially those normally used for the manufacture of contact lenses. By a hydrophilic vinylic monomer is understood a monomer which as a homopolymer typically yields a polymer that is water-soluble or can absorb at least 10 percent by weight water. In analogous manner, by a hydrophobic vinylic monomer is understood a monomer which as a homopolymer typically yields a polymer that is insoluble in water and can absorb less than 10 percent by weight water.

It is preferable to use a hydrophobic vinylic comonomer, or a mixture of a hydrophobic vinylic comonomer with a hydrophilic vinylic comonomer, whereby this mixture contains at least 50 percent by weight of a hydrophobic vinyl comonomer. In this way, the mechanical properties of the polymer may be improved without the water content dropping substantially. What basically applies is that both conventional hydrophobic vinylic comonomers and conventional hydrophilic vinylic comonomers are suitable for copolymerisation with the prepolymers according to the invention.

Suitable hydrophobic vinylic comonomers include, without this being a definitive list, C₁-C₁₈-alkylacrylates and -methacrylates, C₃-C₁₈ alkylacrylamides and -methacrylamides, acrylonitrile, methacrylonitrile, vinyl-C₁-C₁₈-alkanoates, C₂-C₁₈-alkenes, C₂-C₁₈-halo-alkenes, styrene, C₁-C₆-alkylstyrene, vinylalkylethers in which the alkyl moiety has 1 to 6 carbon atoms, C₂-C₁₀-perfluoralkyl-acrylates and -methacrylates or correspondingly partially fluorinated acrylates and methacrylates, C₃-C₁₂-perfluoralkyl-ethyl-thiocarbonylaminoethyl-acrylates and -methacrylates, acryloxy and methacryloxy-alkylsiloxanes, N-vinylcarbazole, C₁-C₁₂-alkylesters of maleic acid, fumaric acid, itaconic acid, mesaconic acid and the like. Preference is given e.g. to C₁-C₄-alkylesters of vinylically unsaturated carboxylic acids with 3 to 5 carbon atoms or vinylesters of carboxylic acids with up to 5 carbon atoms.

Examples of suitable hydrophobic vinylic comonomers include methylacrylate, ethylacryiate, propylacrylate, isopropylacrylate, cyclohexylacrylate, 2-ethylhexylacrylate, methylmethacrylate, ethylmethacrylate, propylmethacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethyl-thiocarbonylaminoethyl-methacrylate, isobomyl methacrylate, trifluoroethyl methacrylate, hexafluoroisopropyl methacrylate, hexafiuorobutyl methacrylate, tris-trimethylsilyloxy-silyl-propyl methacrylate, 3-methacryloxypropyl-pentamethyl-disiloxane and bis(methacryloxypropyl)tetramethyl-disiloxane.

Suitable hydrophilic vinylic comonomers include, without this being a definitive list, hydroxy-substituted lower alkylacrylates and -methacrylates, acrylamide, methacrylamide, lower alkyl-acrylamides and -methacrylamides, ethoxylated acrylates and methacrylates, hydroxy-substituted lower alkyl-acrylamides and -methacrylamides, hydroxy-substituted lower alkylvinylethers, sodium ethylene sulphonate, sodium styrene sulphonate, 2-acrylamido-2-methylpropane-sulphonic acid, N-vinyl pyrrole, N-vinyl succinimide, N-vinyl pyrrolidone, 2- or 4-vinyl pyridine, acrylic acid, methacrylic acid, amino- (whereby the term "amino" also includes quaternary ammonium), mono-lower-alkylamino- or di-lower-alkylamino-lower-alkyl-acrylates and -methacrylates, allyl alcohol and the like. Preference is given e.g. to hydroxy-substituted C₂-C₄-alkyl(meth)acrylates, five- to seven-membered N-vinyl-lactams, N,N-di-C₁-C₄-alkyl(meth)acrylamides and vinylically unsaturated carboxylic acids with a total of 3 to 5 carbon atoms.

Examples of suitable hydrophilic vinylic comonomers include hydroxyethyl methacrylate, hydroxyethyl acrylate, acrylamide, methacrylamide, dimethylacrylamide, allyl alcohol, vinyl pyridine, vinyl pyrrolidone, glycerol methacrylate, N-(1,1-dimethyl-3-oxobutyl)acrylamide, and the like.

Preferred hydrophobic vinylic comonomers are methyl methacrylate and vinyl acetate. Preferred hydrophilic vinylic comonomers are 2-hydroxyethyl methacrylate, N-vinyl pyrrolidone and acrylamide.

The processing according to the invention of the prepolymers into moulded ophthalmic articles, especially contact lenses, may take place in a manner known *per se,* for example whereby photo-crosslinking of the prepotymers according to the invention takes place in an appropriate contact lens mould. Further examples of moulded articles according to the invention, apart from contact lenses, are e.g. intra-occular lenses or eye dressings, furthermore biomedicinal articles which may be used in surgery, such as heart valves, artificial arteries or the like, also films or membranes, e.g. membranes for diffusion control, photo-structurable films for data storage, or photo resist materials, e.g. membranes or moulded articles for etch resist printing or screen resist printing.

One preferred process for the production of an ophthalmic moulding is characterised in that it comprises the following steps:
a) introducing a prepolymer, which is obtainable as depicted above from components (a), (b), (c) and (d) and is liquid or readily meltable at room temperature, and which is essentially free from solvents, into a mould, in the presence or preferably in the absence of an additional vinylic comonomer, and supplementing with a photo-initiator,
b) initiating the photo-crosslinking,
c) opening the mould, so that the moulding can be removed from the mould.

A further preferred process for the production of an ophthalmic moulding is characterised in that it comprises the following steps:
a) producing a water-soluble prepolymer, which is obtainable as depicted above from components (a), (b), (c) and (d), in an essentially aqueous solution, in the presence or preferably in the absence of an additional vinylic comonomer, and supplementing with a photo-initiator,
b) introducing the solution obtained into a mould,
c) initiating the photo-crosslinking,
d) opening the mould, so that the moulding can be removed from the mould.

The prepolymers according to the invention may be introduced into a mould by methods known *per se*, especially conventional dispensing, e.g. dropwise addition. If vinylic comonomers are present, the comonomers employed are those mentioned above, in the quantities depicted above. Any vinylic comonomers that are optionally present are advantageously first of all mixed with the prepolymer according to the invention and then introduced into the mould.

Appropriate moulds are made for example from polypropylene. Suitable materials for re-usable mounds are e.g. quartz, sapphire glass or metals.

If the moulded articles to be produced are contact lenses, these may be produced in a manner known per se, e.g. in a conventional "spin-casting mould", as described for example in US-A-3,408,429, or by the so-called full mould process in a static form, as described e.g. in US-A-4,347,198.

Photo-crosslinking may be initiated in the mould e.g. by means of actinic radiation, such as UV light, or ionising radiation, such as gamma radiation or X-rays.

As already mentioned, photo-crosslinking is advantageously carried out in the presence of a photo-initiator which can initiate radical crosslinking. The photo-initiator is advantageously added to the prepolymers according to the invention prior to introducing them into the mould, preferably by mixing the polymers and the photo-intiator together. The amount of photo-initiator may be selected from a wide range, whereby an amount of up to 0.05 g/g polymer and especially up to 0.003 g/g polymer has proved favourable.

What is notable is that the crosslinking according to the invention may be effected in a very short time, e.g. in ≤ 60 minutes, advantageously in ≤ 20 minutes, preferably in ≤ 10 minutes, most preferably in ≤ 5 minutes, particularly preferably in 1 to 60 seconds and most particularly in 1 to 30 seconds.

Opening of the mould so that the moulded article can be removed from the mound may take place in a manner known *per se.*

If the moulded article produced according to the invention is a contact lens which was produced solvent-free from an already purified prepolymer according to the invention, then after removal of the moulded article, it is not normally necessary to follow up with purification steps such as extraction. This is because the prepolymers employed do not contain any undesired constituents of low molecular weight; consequently, the crosslinked product is also free or substantially free from such constituents and subsequent extraction can be dispensed with. Accordingly, the contact lens can be directly transformed in the usual way, by hydration, into a ready-to-use contact lens. Appropriate embodiments of hydration are known to the person skilled in the art, whereby ready-to-use contact lenses with very varied water content may be obtained. The contact lens is expanded for example in water, in an aqueous salt solution, especially an aqueous salt solution having an osmolarity of about 200 to 450 milliosmole in 1000 ml (unit: mOsm/ml), preferably about 250 to 350 mOsm/l and especially about 300 mOsm/l, or in a mixture of water or an aqueous salt solution with a physiologically compatible polar organic solvent, e.g. glycerol. Preference is given to expansions of the prepolymer in water or in aqueous salt solutions.

The aqueous salt solutions used for hydration are advantageously solutions of physiologically compatible salts, such as buffer salts conventionally used in the field of contact lens care, e.g. phosphate salts, or isotonising agents conventionally used in the field of contact lens care, such as in particular alkali halides, e.g. sodium chloride, or solutions of mixtures thereof. One example of an especially suitable salt solution is an artificial, preferably buffered lachrymal fluid, which is adapted to natural lachrymal fluid as regards pH value and osmolarity, e.g. an unbuffered or preferably buffered common salt solution, for example buffered by phosphate buffer, whose osmolarity and pH value correspond to the osmolarity and pH value of human lachrymal fluid.

The above-defined hydration fluids are preferably pure, i.e. free or substantially free from undesired constituents. This is most preferably pure water or an artificial lachrymal fluid as described above.

If the moulded article produced according to the invention is a contact lens which was produced from an aqueous solution of an already purified prepolymer according to the invention, then the crosslinked product also does not contain any troublesome impurities. It is therefore not necessary to carry out subsequent extraction. Since crosslinking is carried out in an essentially aqueous solution, it is additionally unnecessary to carry out subsequent hydration. The contact lenses obtainable by this process are therefore notable, according to an advantageous embodiment, for the fact that they are suitable for their intended usage without extraction. By intended usage is understood, in this context, that the contact lenses can be used in the human eye.

The contact lenses obtainable according to the invention have a wide range of unusual and extremely advantageous properties. One of these properties which may be named is for example its excellent compatability with the human cornea, which is based on a well-balanced relationship between water content, oxygen permeability and mechanical properties. Moreover, the contact lenses according to the invention have high resistance of shape. No changes in shape can be detected even after autoclaving at e.g. about 120°C.

What is also notable is that the contact lenses according to the invention, i.e. especially those containing a crosslinked polymer consisting of a prepolymer that is a polymerisation product of the above-mentioned components (a), (b), (c) and (d), can be produced in a very simple and efficient way compared with the prior art. This is based on many factors. On the one hand, the starting materials may be acquired or produced inexpensively. Secondly, there is the advantage that the prepolymers are surprisingly stable, so that they may undergo a high degree of purification. Therefore, for crosslinking, a polymer may be used which requires practically no more subsequent purification, such as in particular complicated extraction of unpolymerised constituents. Furthermore, crosslinking may take place solvent-free or in aqueous solution, so that a subsequent solvent exchange or the hydration step is not necessary. Finally, photo-polymerisation is effected within a short period, so that from this point of view also the production process for the contact lenses according to the invention may be set up in an extremely economic way.

Of course, all the above-mentioned advantages apply not only to contact lenses, but also to other moulded articles according to the invention. The total of the different advantageous aspects during production of the moulded articles according to the invention leads to the suitability of the moulded articles in particular as mass-produced articles, for example as contact lenses which are worn for a short time-span and then replaced by new lenses.

In the following examples, if not expressly stated otherwise, the quantities given are amounts by weight, and the temperatures are given in degrees Celsius. The examples are not suitable for limiting the invention in any way, for example to the scope of the examples.

### Preparation examples

**Example 1:** 30 g of polyethylene glycol 600 and 0.67 g of 1,1,1-trimethylol propane are dissolved in 300 ml of ethyl methyl ketone and heated to ca. 45°C. 0.07 g of dibutyl tin dilaurate are added, then 8.35 g of isophorone diisocyanate added dropwise, and stirred for ca. 4 hours at 45°C. Then, 6.2 g of isocyanato ethyl methacrylate (IEM) are added and stirring continued until the isocyanate content has lowered to 0.04 equivalents/kg. The solution is concentrated and the product precipitated from diethylether as a slightly yellowish oil.

**Example 1a:** 30 g of polyethylene glycol 600 and 0.67 g of 1,1,1-trimethylol propane are dissolved in 300 ml of tetrahydrofuran and heated to ca. 45°C. 0.07 g of dibutyl tin dilaurate are added, then 8.35 g of isophorone diisocyanate are added dropwise, and stirring effected for ca. 4 hours at 45°C. Then, 4.18 g of methacrylol chloride and 2.8 g of triethylamine are added and stirring continued until practically no acid chloride can be detected. The solution is concentrated and the product precipitated from diethylether as a slightly yellowish oil.

**Example 2:** 20 g of polyethylene glycol 1000 and 0.54 g of 1,1,1-trimethylol propane are dissolved in 250 ml of ethyl methyl ketone and heated to ca. 45°C. 0.05 g of dibutyl tin dilaurate are added, then 4.45 g of isophorone diisocycnate are added dropwise, and stirring effected for ca. 2 hours at 45°C. Then, 1.86 g of isocyanato ethyl methacrylate (IEM) are added dropwise, and stirring continued for ca. 10 hours at 45°C. At the end, the solution is concentrated and the product precipitated from diethylether as a clear oil which begins to crystallise after some time.

**Example 3:** 6 g of polyethylene glycol 600, 10 g of polyethylene glycol 1000 and 0.54 g of 1,1,1-trimethylol propane are reacted with 4.45 g of isophorone diisocyanate and 1.86 g of isocyanato ethyl methacrylate (IEM) by the method described in example 2. After precipitation from diethylether, a clear, viscous oil is obtained.

**Example 4:** 12 g of polyethylene glycol 600 and 0.37 g of glycerol are reacted with 3.36 g of hexamethylene diisocyanate and 1.86 g of isocyanato ethyl methacrylate (IEM) by the method described in example 2. After precipitation from diethylether, a clear, viscous oil is obtained.

### Application Examples

**Example 5:** 1.4 g of the polymer obtained according to example 1 and 4 mg of Irgacure® 2959 are mixed with 0.6 g of water until a clear homogeneous solution is obtained. From the clear, viscous solution, a 0.1 mm thick film is produced between two glass plates with spacers. The film is exposed to a UV lamp for 10 seconds. A clear, flexible film is obtained, which swells in water to form a clear hydrogel with a solid content of 42%. The elasticity module of the swollen film is 1 MPa (measured with a tensometer from the company Vitrodyne), and the tensile expansion has a value of 130%.

By employing the above process with an equivalent amount of the polymer produced according to example 1a, instead of the polymer obtained according to example 1, a film with equally good properties is obtained.

**Example 6:** 1.4 g of the polymer obtained according to example 2 and 4 mg of Irgacure® 2959 are mixed with 0.6 g of water until a clear homogeneous solution is obtained. From the clear, viscous solution, a 0.1 mm thick film is produced between two glass plates with spacers. The film is exposed to a UV lamp for 10 seconds. A clear, flexible film is obtained, which swells in water to form a clear hydrogel with a dry content of 31%. The elasticity module of the swollen film is 0.8 MPa (measured with a tensometer from the company Vitrodyne), and the tensile expansion has a value of 140%.

**Example 7:** From the product according to example 3, a 70% aqueous solution with 0.2 % by weight Irgacure® 2959 is produced by the method described in example 1. The film obtained through irradiation for 10 seconds swells in water to form a hydrogel with 30% dry content. The elasticity module of the film is 0.7 MPa, and the tensile expansion is ca. 120%.

**Example 8:** 1.0 g of the polymer obtained according to example 4 and 4 mg of Irgacure® 2959 are mixed with 1.0 g of water until a clear homogeneous solution is obtained. From the clear, viscous solution, a 0.1 mm thick film is produced between two glass plates with spacers. The film is exposed to a UV lamp for 10 seconds. A clear, flexible film is obtained, which swells in water to form a clear hydrogel with a dry content of 26%. The elasticity module of the swollen film is 0.48 MPa (measured with a tensometer from the company Vitrodyne), and the tensile expansion has a value of ca. 110%.

## Claims

1. Ophthalmic moulding, which is obtainable by crosslinking a prepolymer which is the copolymerisation product of
(a) at least one polyalkylene glycol of formula
HO-(CH₂-CH₂-O)ₙ-(CHY₁-CHY₂-O)ₘ-(CHY₃-CHY₄-O)ₚ-H (1)
or
HO-[(CH₂-CH₂-CH₂-CH₂-O-]_{q}-H (1'),
wherein one of radicals Y₁ and Y₂ is methyl and the other is hydrogen,
one of radicals Y₃ and Y₄ is ethyl and the other is hydrogen, q is a number from 1 to 50, and n, m and p, independently of one another, are each a number from 0 to 100, wherein the sum of (n+m+p) is 5 to 100,
(b) at least one polyhydroxy compound selected from the group consisting of
(i) a linear or branched aliphatic polyhydroxy compound of formula
R₁-(OH)ₓ (2),
wherein R₁ is the radical of a multi-functional linear or branched aliphatic alcohol and x is a number ≥ 3,
(ii) a polyether polyol, which is the polymerisation product of a compound of formula (2) and a glycol,
(iii) a polyester polyol, which is the polymerisation product of a compound of formula (2), a dicarboxylic acid or a derivative thereof and a diol, and
(iv) a cycloaliphatic polyol selected from the group consisting of a C₅-C₈-cycloalkane, which is substituted by ≥ 3 hydroxy groups, and an unsubstituted mono- and disaccharide,
(c) at least one di- or polyisocyanate of formula
R₂-(NCO)_{y} (3)
wherein R₂ is the radical of an aliphatic, cycloaliphatic, aliphatic-cycloaliphatic, aromatic or araliphatic di- or polyisocyanate and y is a number from 2 to 6,
(d) at least one ethylenically unsaturated monoisocyanate of formula 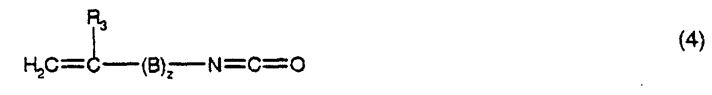 or an ethylenically unsaturated acid halide of formula 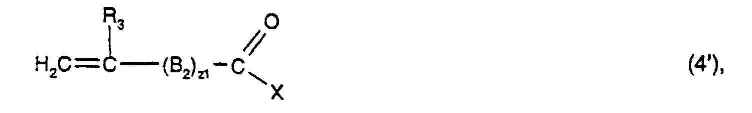 wherein R₃ is hydrogen or methyl, z and z1, independently of one another, each signify the number 0 or 1, B signifies C₁-C₆-alkylene, or phenylene or C₇-C₁₂-aralkylene which is each unsubstituted or substituted by C₁-C₄-alkyl or C₁-C₄-alkoxy, or a radical of formula 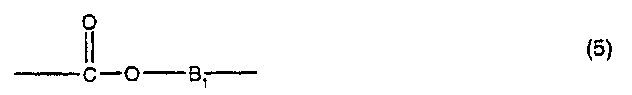 B₁ signifies linear or branched C₂-C₁₂-alkylene which is optionally interrupted by one or more oxygen atoms, B₂ is C₁-C₆-alkylene and X signifies halogen,
and optionally one or more further copolymerisable monomers, in the absence or presence of an additional vinylic comonomer.

2. Ophthalmic moulding according to claim 1, characterised in that the article in question is a contact lens.

3. Ophthalmic moulding according to claim 1, characterised in that it is obtainable by crosslinking a prepolymer, which is the copolymerisation product of the components (a), (b), (c) and (d) given in claim 1, in the absence or presence of an additional vinylic comonomer.

4. Ophthalmic moulding according to one of claims 1 to 3, characterised in that component (a) is a polyalkylene glycol of formula (1), wherein p is 0, n and m, independently of one another, are each a number from 0 to 50, and the sum of (n+m) is 8 to 50.

5. Ophthalmic moulding according to one of claims 1 to 4, characterised in that component (b) is a compound of formula (2), wherein R₁ signifies the radical of an aliphatic polyol with 3 to 12 carbon atoms, and x denotes a number from 3 to 8.

6. Ophthalmic moulding according to one of claims 1 to 5, characterised in that component (b) is glycerol, diglycerol, triglycerol, 1,1,1-trishydroxymethylethane, 1,1,1-trishydroxymethylpropane, 1,2,4-butanetriol, 1,2,6-hexanetriol, erythritol, pentaerythritol, di- or tripentaerythritol, arabitol, sorbitol, disorbitol or mannitol or a mixture of two or more of the said polyols.

7. Ophthalmic moulding according to one of claims 1 to 6, characterised in that the polyisocyanate according to (c) is a compound of formula
OCN-R₂-NCO, (3a),
wherein R₂ signifies linear or branched C₃-C₁₈-alkylene, or unsubstituted or C₁-C₄-alkyl-substituted or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene.

8. Ophthalmic moulding according to claim 7, characterised in that R₂ is linear or branched C₆-C₁₀-alkylene, cyclohexylene-methylene or cyclohexylene-methylenecyclohexylene which are either unsubstituted or substituted in the cyclohexyl moiety by 1 to 3 methyl groups, or phenylene or phenylene-methylene-phenylene which are either unsubstituted or substituted in the phenyl moiety by methyl.

9. Ophthalmic moulding according to one of claims 1 to 8, characterised in that the di- or polyisocyanate according to (c) is isophorone diisocyanate, toluylene-2,4-diisocyanate, methylenebis(cyclohexylisocyanate), 1,6-diisocyanato-2,2,4-trimethyl-n-hexane, methylene-bis(phenylisocyanate) or hexamethylene-diisocyanate.

10. Ophthalmic moulding according to one of claims 1 to 9, characterised in that component (d) is a monoisocyanate of formula (4), wherein z signifies the number 1, and B denotes a radical of formula (5) given in claim 1, wherein B₁ is linear or branched C₂-C₈-alkylene.

11. Ophthalmic moulding according to claim 1, obtainable by crossiinking a prepoiymer, which is the copolymerisation product of
(a) one or more polyalkylene glycols of formula
HO-(CH₂-CH₂-O)ₙ-(CHY₁-CHY₂-O)ₘ-H (1a),
wherein one of radicals Y₁ and Y₂ signifies methyl and the other radical signifies hydrogen,
and n and m, independently of one another, each denote a number from 0 to 50,
wherein the sum of (n+m) is 8 to 50,
(b) (i) one or more polyhydroxy compounds of formula
R₁-(OH)ₓ (2)
wherein R₁ is the radical of a multi-functional aliphatic alcohol and x is a number from 3 to 8,
(c) one or more diisocyanates of formula
OCN-R₂-NCO (3a),
wherein R₂ signifies linear or branched C₃-C₁₈-alkylene or unsubstituted or C₁-C₄-alkyl-substituted or C₁-C₄-aikoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene, and
(d) one or more ethylenically unsaturated compounds of formula 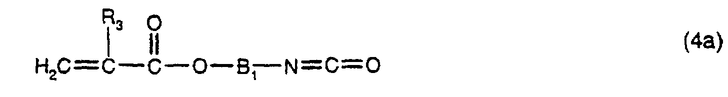 or 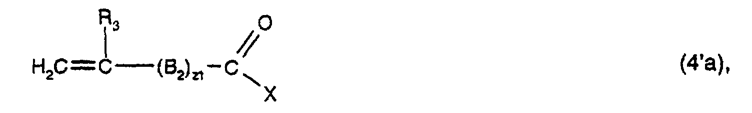 wherein R₃ is hydrogen or methyl, B₁ signifies linear or branched C₂-C₈-alkylene, B₂ is C₁-C₄-alkylene, z1 signifies the number 0 or 1 and X represents halogen,
in the absence or presence of an additional vinylic comonomer.

12. Ophthalmic moulding according to claim 1, obtainable by crosslinking a prepolymer, which is the copolymerisation product of
(a) one or more polyalkylene glycols of formula
HO-(CH₂-CH₂-O)ₙ-(CHY₁-CHY₂-O)ₘ-H (1a),
wherein one of radicals Y₁ and Y₂ signifies methyl and the other radical signifies hydrogen,
and n and m, independently of one another, each denote a number from 0 to 25,
wherein the sum of (n+m) is 9 to 25,
(b) one or more polyhydroxy compounds selected from the group consisiting of glycerol, diglycerol, triglycerol, 1,1,1-trishydroxymethylethane, 1,1,1-trishydroxymethylpropane,
1,2,4-butanetriol, 1,2,6-hexanetriol, erythritol, pentaerythritol, di- or tripentaerythritol,
arabitol, sorbitol, disorbitol and mannitol and mixtures thereof,
(c) a diisocyanate of formula
OCN-R₂-NCO (3a),
wherein R₂ signifies linear or branched C₆-C₁₀-alkylene, cyclohexylene-methylene or cyclohexylene-methylene-cyclohexylene either unsubstituted or substituted in the cyclohexyl moiety by 1 to 3 methyl groups, or phenylene or phenylene-methylene-phenylene either unsubstituted or substituted in the phenyl moiety by methyl, and
(d) an ethylenically unsaturated monoisocyanate of formula 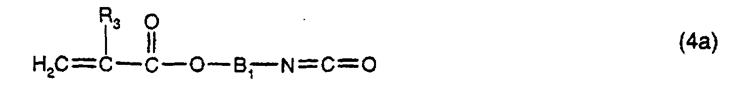 wherein R₃ denotes hydrogen or methyl and B₁ signifies linear C₂-C₄-alkylene,
in the absence or presence of an additional vinylic comonomer.

13. Ophthalmic moulding according to one of claims 1 to 12, characterised in that crosslinking of the prepolymer takes place in the absence of an additional vinylic comonomer.

14. Ophthalmic moulding according to one of claims 1 to 12, characterised in that the prepolymer in substantially pure form is photo-crosslinked using a photo-initiator, in aqueous solution in the absence of an additional vinylic comonomer.

15. Prepolymer which is the copolymerisation product of components (a), (b), (c) and (d) given in claim 1.

16. Prepolymer according to claim 15, which is the copolymerisation product of
(a) one or more polyalkylene glycols of formula
HO-(CH₂-CH₂-O)ₙ-(CHY₁-CHY₂-O)ₘ-H (1a),
wherein one of radicals Y₁ and Y₂ signifies methyl and the other radical signifies hydrogen,
and n and m, independently of one another, each denote a number from 0 to 50,
wherein the sum of (n+m) is 8 to 50,
(b) (i) one or more polyhydroxy compounds of formula
R₁-(OH)ₓ (2)
wherein R₁ is the radical of a multi-functional aliphatic or cycloaliphatic alcohol and x is a number from 3 to 8,
(c) one or more diisocyanates of formula
OCN-R₂-NCO (3a),
wherein R₂ signifies linear or branched C₃-C₁₈-alkylene or unsubstituted or C₁-C₄-alkyl-substituted or C₁-C₄-alkoxy-substituted C₆-C₁₀-arylene, C₇-C₁₈-aralkylene, C₆-C₁₀-arylene-C₁-C₂-alkylene-C₆-C₁₀-arylene, C₃-C₈-cycloalkylene, C₃-C₈-cycloalkylene-C₁-C₆-alkylene, C₃-C₈-cycloalkylene-C₁-C₂-alkylene-C₃-C₈-cycloalkylene or C₁-C₆-alkylene-C₃-C₈-cycloalkylene-C₁-C₆-alkylene, and
(d) one or more ethylenically unsaturated compounds of formula 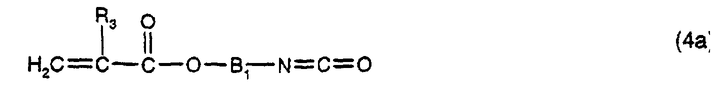 or 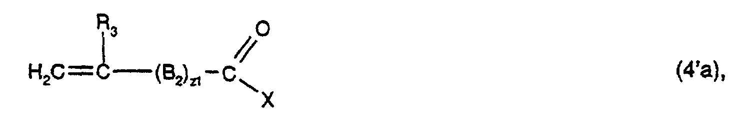 wherein R₃ is hydrogen or methyl, B₁ signifies linear or branched C₂-C₈-alkylene, B₂ is C₁-C₄-alkylene, z1 signifies the number 0 or 1 and X represents halogen.

17. Prepolymer according to claim 15, which is the copolymerisation product of
(a) one or more polyalkylene glycols of formula
HO-(CH₂-CH₂-O)ₙ-(CHY₁-CHY₂-O)ₘ-H (1a),
wherein one of radicals Y₁ and Y₂ signifies methyl and the other radical signifies hydrogen,
and n and m, independently of one another, each denote a number from 0 to 25,
wherein the sum of (n+m) is 9 to 25,
(b) one or more polyhydroxy compounds selected from the group glycerol, diglycerol, triglycerol, 1,1,1-trishydroxymethylethane, 1,1,1-trishydroxymethylpropane, 1,2,4-butanetriol, 1,2,6-hexanetriol, erythritol, pentaerythritol, di- or tripentaerythritol, arabitol,
sorbitol, disorbitol and mannitol or mixtures thereof,
(c) a diisocyanate of formula
OCN-R₂-NCO (3a),
wherein R₂ signifies linear or branched C₆-C₁₀-alkylene, cyclohexylene-methylene or cyclohexylene-methylene-cyclohexylene either unsubstituted or substituted in the cyclohexyl moiety by 1 to 3 methyl groups, or phenylene or phenylene-methylene-phenylene either unsubstituted or substituted in the phenyl moiety by methyl, and
(d) an ethylenically unsaturated monoisocyanate of formula 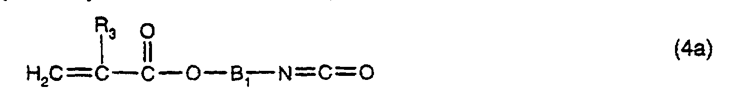 wherein R₃ denotes hydrogen or methyl and B₁ signifies linear or branched C₂-C₄-alkylene.

18. Process for the production of a prepolymer according to claim 15, characterised in that components (a), (b), (c) and (d) given in claim 1 are reacted together, in any sequence, in an inert solvent at a temperature of -5°C to 150°C.

19. Process according to claim 18, characterised in that a mixture of components (a) and (b) is either reacted with a mixture of components (c) and (d) or firstly with component (c) and then with component (d).

20. Process according to claim 18, characterised in that a mixture of 1 OH equivalent of component (a) and 0.05 to 1 OH equivalents of component (b) is reacted in an inert solvent at a temperature of 0 to 100°C in the presence of a catalyst either with a mixture of 0.5 to 1.95 NCO equivalents of a component (c) and 0.1 to 2 NCO or acid halide equivalents of a component (d) or first of all with 0.5 to 1.95 NCO equivalents of a component (c) and then with 0.1 to 2 NCO or acid halide equivalents of a component (d).

21. Process according to claim 18, characterised in that a mixture of 1 OH equivalent of component (a) and 0.1 to 0.8 OH equivalents of component (b) is reacted, in an inert solvent at a temperature of 0 to 80°C, in the presence of a catalyst selected from the group of metal salts of organic carboxylic acids and tertiary amine, first of all with 0.6 to 1.5 NCO equivalents of component (c) and then with 0.1 to 1.5 NCO or acid halide equivalents of a component (d).

22. Process for the production of a moulding, characterised in that it comprises the following steps:
a) introducing a prepolymer, which is obtainable according to one of claims 15 to 21 and is liquid or readily meltable at room temperature, and which is essentially free from solvents, into a mould, in the absence or presence of an additional vinylic comonomer, and supplementing with a photo-initiator,
b) initiating the photo-crosslinking,
c) opening the mould, so that the moulded article can be removed from the mould.

23. Process according to claim 22, characterised in that the process is carried out in the absence of an additional vinylic comonomer.

24. Process for the production of a moulding, characterised in that it comprises the following steps:
a) producing a water-soluble prepolymer, which is obtainable according to one of claims 15 to 21, in an essentially aqueous solution, in the absence or presence of an additional vinylic comonomer, and supplementing with a photo-initiator,
b) introducing the solution obtained into a mould,
c) initiating the photo-crosslinking,
d) opening the mould, so that the moulded article can be removed from the mould.

25. Process according to claim 24, characterised in that the process is carried out in the absence of an additional vinylic comonomer.

26. Process according to one of claims 22 to 25, characterised in that the moulding in question is a contact lens.

27. Moulding, especially contact lens, obtainable by the process according to one of claims 22 to 25.

28. Contact lens according to claim 27, characterised in that is it suitable for its intended usage without extraction.

## Patentansprüche

1. Ophthalmischer Formling, der durch Vernetzen eines Prepolymers erhältlich ist, das das Copolymerisationsprodukt ist von
(a) mindestens einem Polyalkylenglycol der Formel
HO-(CH₂-CH₂-O)ₙ-(CHY₁-CHY₂-O)ₘ-(CHY₃-CHY₄-O)ₚ-H (1)
oder
HO-[(CH₂-CH₂-CH₂-CH₂-O-]_{q}-H (1')
worin einer der Reste Y₁ und Y₂ Methyl darstellt, und der andere Wasserstoff darstellt, einer der Reste Y₃ und Y₄ Ethyl darstellt und der andere Wasserstoff darstellt, q eine Zahl von 1 bis 50 ist und n, m und p unabhängig voneinander jeweils eine Zahl von 0 bis 100 sind, wobei die Summe von (n+m+p) 5 bis 100 ist,
(b) mindestens einer Polyhydroxyverbindung, ausgewählt aus der Gruppe, bestehend aus
(i) einer linearen oder verzweigten aliphatischen Polyhydroxyverbindung der Formel
R₁-(OH)ₓ (2)
worin R₁ den Rest eines multifunktionellen linearen oder verzweigten aliphatischen Alkohols darstellt und x eine Zahl ≥ 3 ist,
(ii) einem Polyetherpolyol, das das Polymerisationsprodukt einer Verbindung der Formel (2) und eines Glycols ist,
(iii) einem Polyesterpolyol, das das Polymerisationsprodukt einer Verbindung der Formel (2), einer Dicarbonsäure oder eines.Derivats davon und eines Diols ist, und
(iv) einem cycloaliphatischen Polyol, ausgewählt aus der Gruppe, bestehend aus einem C₅-C₈-Cycloalkan, das mit ≥ 3 Hydroxygruppen substituiert ist, und einem unsubstituierten Mono- und Disaccharid,
(c) mindestens einem Di- oder Polyisocyänat oder Formel
R₂-(NCO)_{y} (3)
worin R₂ den Rest eines aliphatischen, cycloaliphatischen, aliphatisch-cycloaliphatischen, aromatischen oder araliphatischen Di- oder Polyisocyanats darstellt und y eine Zahl von 2 bis 6 ist,
(d) mindestens einem ethylenisch ungesättigten Monoisocyanat der Formel 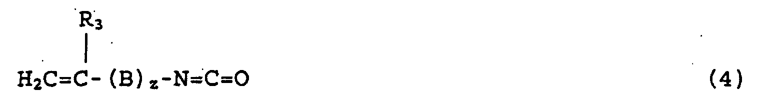 oder einem ethylenisch ungesättigten Säurehalogenid der Formel 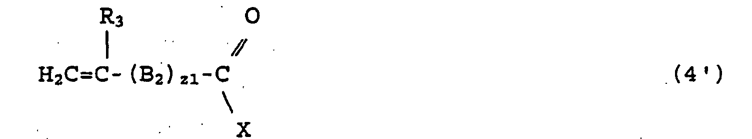 worin R₃ Wasserstoff oder Methyl darstellt, z und z1 unabhängig voneinander jeweils die Zahl 0 oder 1 bedeuten, B C₁-C₆-Alkylen oder Phenylen oder C₇-C₁₂-Aralkylen, jeweils unsubstituiert oder mit C₁-C₄-Alkyl oder C₁-C₄-Alkoxy substituiert oder einen Rest der Formel 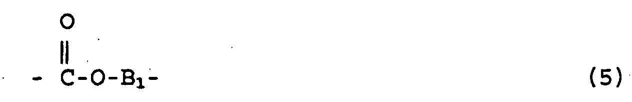 darstellt, B₁ lineares oder verzweigtes C₂-C₁₂-Alkylen bedeutet, das gegebenenfalls durch ein oder mehrere Sauerstoffatome unterbrochen ist, B₂ C₁-C₆-Alkylen darstellt und X Halogen bedeutet,
und gegebenenfalls einem oder mehreren weiteren copolymerisierbaren Monomeren in Abwesenheit oder Gegenwart eines zusätzlichen vinylischen Comonomers.

2. Ophthalmischer Formling nach Anspruch 1, dadurch gekennzeichnet, daß der in Frage kommende Gegenstand eine Kontaktlinse ist.

3. Ophthalmischer Formling nach Anspruch 1, dadurch gekennzeichnet, daß er durch Vernetzen eines Prepolymers, das das. Copolymerisationsprodukt der Komponenten (a), (b), (c) und (d), die in Anspruch 1 angegeben sind, darstellt, in Abwesenheit oder Gegenwart eines zusätzlichen vinylischen Comonomers erhältlich ist.

4. Ophthalmischer Formling nach einem der Ansprüche 1 bis 3, dadurch gekennzeichnet, daß Komponente (a) ein Polyalkylenglycol der Formel (1) ist, worin p 0 ist, n und m unabhängig voneinander jeweils eine Zahl von 0 bis 50 sind und die Summe von (n+m) 8 bis 50 ist.

5. Ophthalmischer Formling nach einem der Ansprüche 1 bis 4, dadurch gekennzeichnet, daß Komponente (b) eine Verbindung der Formel (2) ist, worin R₁ den Rest eines aliphatischen Polyols mit 3 bis 12 Kohlenstoffatomen bedeutet und x eine Zahl von 3 bis 8 bedeutet.

6. Ophthalmischer Formling nach einem der Ansprüche 1 bis 5, dadurch gekennzeichnet, daß Komponente (b) Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerythrit, Arabit, Sorbit, Disorbit oder Mannit oder ein Gemisch von zwei oder mehreren der Polyole darstellt.

7. Ophthalmischer Formling nach einem der Ansprüche 1 bis 6, dadurch gekennzeichnet, daß das Polyisocyanat gemäß (c) eine Verbindung der Formel
OCN-R₂-NCO (3a)
darstellt, worin R₂ lineares oder verzweigtes C₃-C₁₈-Alkylen oder unsubstituiertes oder C₁-C₄-Alkyl-substituiertes oder C₁-C₄-Alkoxy-substituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₃-C₈-cycloalkylen oder C₁-C₆-Alkylen-C₃-C₈-cycloalkylen-C₁-C₆-alkylen bedeutet.

8. Ophthalmischer Formling nach Anspruch 7, dadurch gekennzeichnet, daß R₂ lineares oder verzweigtes C₆-C₁₀-Alkylen, Cyclohexylen-methylen oder Cyclohexylen-methylen-cyclohexylen, die entweder unsubstituiert oder in der Cyclohexyleinheit mit 1 bis 3 Methylgruppen substituiert sind, oder Phenylen oder Phenylen-methylen-phenylen, die entweder unsubstituiert oder in der Phenyleinheit mit Methyl substituiert sind, darstellt.

9. Ophthalmischer Formling nach einem der Ansprüche 1 bis 8, dadurch gekennzeichnet, daß das Di- oder Polyisocyanat gemäß (c) Isophorondiisocyanat, Toluylen-2,4-diisocyanat, Methylenbis (cyclohexylisocyanat), 1,6-Diisocyanato-2,2,4-trimethyl-n-hexan, Methylenbis(phenylisocyanat) oder Hexamethylendiisocyanat darstellt.

10. Ophthalmischer Formling nach einem der Ansprüche 1 bis 9, dadurch gekennzeichnet, daß Komponente (d) ein Monoisocyanat von Formel (4) ist, worin z die Zahl 1 bedeutet und B einen Rest der in Anspruch 1.angegebenen Formel (5) bedeutet, worin B₁ lineares oder verzweigtes C₂-C₈-Alkylen darstellt.

11. Ophthalmischer Formling nach Anspruch 1, erhältlich durch Vernetzen eines Prepolymers, das das Copolymerisationsprodukt ist von
(a) einem oder mehreren Polyalkylenglycolen der Formel
HO-(CH₂-CH₂-O)ₙ-(CHY₁-CHY₂-O)ₘ-H (1a)
worin einer der Reste Y₁ und Y₂ Methyl bedeutet und der andere Rest Wasserstoff bedeutet, und n und m unabhängig voneinander jeweils eine Zahl von 0 bis 50 bedeuten, wobei die Summe (n+m) 8 bis 50 ist,
(b) (i) einer oder mehreren Polyhydroxyverbindungen der Formel
R₁-(OH)ₓ (2)
worin R₁ der Rest eines multifunktionellen aliphatischen Alkohols ist und x eine Zahl von 3 bis 8 ist,
(c) einem oder mehreren Diisocyanaten der Formel
OCN-R₂-NCO (3a)
worin R₂ lineares oder verzweigtes C₃-C₁₈-Alkylen oder unsubstituiertes oder C₁-C₄-Alkyl-substituiertes oder C₁-C₄-Alkoxysubstituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₃-C₈-cycloalkylen oder C₁-C₆-Alkylen-C₃-C₈-cycloalkylen-C₁-C₆-alkylen bedeutet, und
(d) einer oder mehreren ethylenisch ungesättigten Verbindungen der Formel 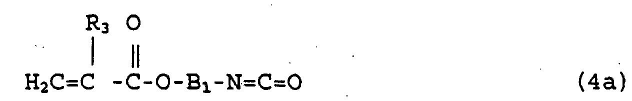 oder 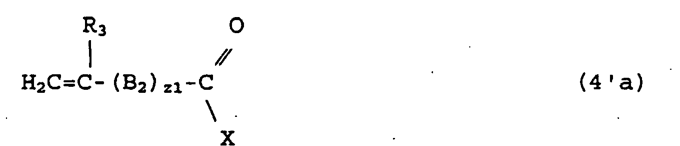 worin R₃ Wasserstoff oder Methyl darstellt, B₁ lineares oder verzweigtes C₂-C₈-Alkylen darstellt, B₂ C₁-C₄-Alkylen darstellt, z1 die Zahl 0 oder 1 bedeutet und X Halogen wiedergibt,
in Abwesenheit oder Gegenwart eines zusätzlichen vinylischen Comonomers.

12. Ophthalmischer Formling nach Anspruch 1, erhältlich durch Vernetzen eines Prepolymers, das das Copolymerisationsprodukt ist von
(a) einem oder mehreren Polyalkylenglycölen der Formel
HO-(CH₂-CH₂-O)ₙ- (CHY₁-CHY₂-O)ₘ-H (1a)
worin einer der Reste Y₁ und Y₂ Methyl bedeutet und der andere Rest Wasserstoff bedeutet, und n und m unabhängig voneinander jeweils eine Zahl von 0 bis 25 bedeuten, wobei die Summe von (n+m) 9 bis 25 ist,
(b) einer oder mehreren Polyhydroxyverbindungen, ausgewählt aus der Gruppe, bestehend aus Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerythrit, Arabit, Sorbit, Disorbit und Mannit und Gemischen davon,
(c) einem Diisocyanat der Formel
OCN-R₂-NCO (3a)
worin R₂ lineares oder verzweigtes C₆-C₁₀-Alkylen, Cyclohexylen-Methylen oder Cyclohexylen-Methylen-Cyclohexylen, entweder unsubstituiert oder in der Cyclohexyleinheit mit 1 bis 3 Methylgruppen substituiert oder Phenylen oder Phenylen-Methylen-Phenylen, entweder unstibstituiert oder in der Phenyleinheit mit Methyl substituiert, bedeutet, und
(d) einem ethylenisch ungesättigten Monoisocyanat der Formel 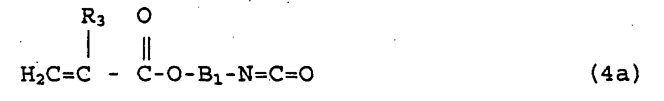 worin R₃ Wasserstoff oder Methyl bedeutet und B₁ lineares C₂-C₄-Alkylen bedeutet, in Abwesenheit oder Gegenwart eines zusätzlichen vinylischen Comonomers.

13. Ophthalmischer Formling nach einem der Ansprüche 1 bis 12, dadurch gekennzeichnet, daß das Vernetzen des Prepolymers in Abwesenheit eines zusätzlichen vinylischen Comonomers stattfindet.

14. Ophthalmischer Formling nach einem der Ansprüche 1 bis 12, dadurch gekennzeichnet, daß das Prepolymer in im wesentlichen reiner Form unter Verwendung eines Photostarters in wässeriger Lösung in Abwesenheit eines zusätzlichen vinylischen Comonomers photovernetzt wird.

15. Prepolymer, das das Copolymerisationsprodukt von in Anspruch 1 angegebenen Komponenten (a), (b), (c) und (d) darstellt.

16. Prepolymer nach Anspruch 15, das das Copolymerisationsprodukt ist von
(a) einem oder mehreren Polyalkylenglycolen der Formel
HO-(CH₂-CH₂-O)ₙ-(CHY₁-CHY₂-O)ₘ-H (1a)
worin einer der Reste Y₁ und Y₂ Methyl bedeutet und der andere Rest Wasserstoff bedeutet, und n und m unabhängig voneinander jeweils eine Zahl von 0 bis 50 bedeuten, worin die Summe von (n+m) 8 bis 50 ist,
(b) (i) einer oder mehreren Polyhydroxyverbindungen der Formel
R₁-(OH)ₓ (2)
worin R₁ der Rest eines multifunktionellen aliphatischen oder cycloaliphatischen Alkohols ist und x eine Zahl von 3 bis 8 ist,
(c) einem oder mehreren Diisocyanaten der Formel
OCN-R₂-NCO (3a)
worin R₂ lineares oder verzweigtes C₃-C₁₈-Alkylen oder unsubstituiertes oder C₁-C₄-Alkyl-substituiertes oder C₁-C₄-Alkoxy-substituiertes C₆-C₁₀-Arylen, C₇-C₁₈-Aralkylen, C₆-C₁₀-Arylen-C₁-C₂-alkylen-C₆-C₁₀-arylen, C₃-C₈-Cycloalkylen, C₃-C₈-Cycloalkylen-C₁-C₆-alkylen, C₃-C₈-Cycloalkylen-C₁-C₂-alkylen-C₃-C₈-cycloalkylen oder C₁-C₆-Alkylen-C₃-C₈-cycloalkylen-C₁-C₆-alkylen bedeutet, und
(d) einer oder mehreren ethylenisch ungesättigten Verbindungen der Formel 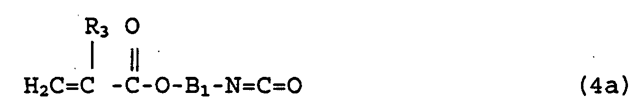 oder 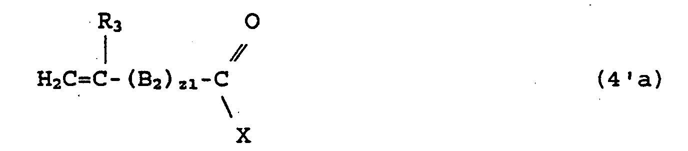 worin R₃ Wasserstoff oder Methyl darstellt, B₁ lineares oder verzweigtes C₂-C₈-Alkylen bedeutet, B₂ C₁-C₄-Alkylen darstellt, z1 die Zahl 0 oder 1 bedeutet und X Halogen wiedergibt.

17. Prepolymer nach Anspruch 15, das ein Copolymerisationsprodukt ist von
(a) einem oder mehreren Polyalkylenglycolen der Formel
HO- (CH₂-CH₂-O)ₙ- (CHY₁-CHY₂-O)ₘ-H (1a)
worin einer der Reste Y₁ und Y₂ Methyl bedeutet und der andere Rest Wasserstoff bedeutet, und n und m unabhängig voneinander jeweils eine Zahl von 0 bis 25 bedeuten, wobei die Summe von (n+m) 9 bis 25 ist,
(b) einer oder mehreren Polyhydroxyverbindungen, ausgewählt aus der Gruppe Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerythrit, Arabit, Sorbit, Disorbit und Mannit oder Gemischen davon,
(c) einem Diisocyanat der Formel
OCN-R₂-NCO (3a)
worin R₂ lineares oder verzweigtes C₆-C₁₀-Alkylen, Cyclohexylenmethylen oder Cyclohexylen-methylen-cyclohexylen, entweder unsubstituiert oder in der Cyclohexyleinheit mit 1 bis 3 Methylgruppen substituiert oder Phenylen oder Phenylen-methylenphenylen entweder unsubstituiert oder in der Phenyleinheit mit Methyl substituiert, bedeutet, und
(d) einem ethylenisch ungesättigten Monoisocyanat der Formel 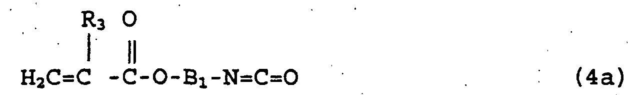 worin R₃ Wasserstoff oder Methyl bedeutet und B₁ lineares oder verzweigtes C₂-C₄-Alkylen bedeutet.

18. Verfahren zur Herstellung eines Prepolymers nach Anspruch 15, dadurch gekennzeichnet, daß in Anspruch 1 angegebene Komponenten (a), (b), (c) und (d) in beliebiger Reihenfolge miteinander in einem inerten Lösungsmittel bei einer Temperatur von -5°C bis 150°C umgesetzt werden.

19. Verfahren nach Anspruch 18, dadurch gekennzeichnet, daß ein Gemisch von Komponenten (a) und (b) entweder mit einem Gemisch von Komponenten (c) und (d) oder zunächst mit Komponente (c) und dann mit Komponente (d) umgesetzt wird.

20. Verfahren nach Anspruch 18, dadurch gekennzeichnet, daß ein Gemisch von 1 OH-Äquivalent von Komponente (a) und 0,05 bis 1 OH-Äquivalenten von Komponente (b) in einem inerten Lösungsmittel bei einer Temperatur von 0 bis 100°C in Gegenwart eines Katalysators entweder mit einem Gemisch von 0,5 bis 1,95 NCO-Äquivalenten einer Komponente (c) und 0,1 bis 2 NCO- oder Säurehalogenid-Äquivalenten einer Komponente (d) oder zunächst mit 0,5 bis 1,95 NCO-Äquivalenten einer Komponente (c) und dann mit 0,1 bis 2 NCO- oder Säurehalogenid-Äquivalenten einer Komponente (d) umgesetzt wird.

21. Verfahren nach Anspruch 18, dadurch gekennzeichnet, daß ein Gemisch von 1 OH-Äquivalent von Komponente (a) und 0,1 bis 0,8 OH-Äquivalenten von Komponente (b) in einem inerten Lösungsmittel bei einer Temperatur von 0 bis 80°C in Gegenwart eines Katalysators, ausgewählt aus der Gruppe von Metallsalzen von organischen Carbonsäuren und tertiärem Amin, zunächst mit 0,6 bis 1,5 NCO-Äquivalenten von Komponente (c) und dann mit 0,1 bis 1,5 NCO- oder Säurehalogenid-Äquivalenten einer Komponente (d) umgesetzt wird.

22. Verfahren zur Herstellung eines Formlings, dadurch gekennzeichnet, daß es die nachstehenden Schritte umfaßt:
a) Einführen eines Prepolymers, das gemäß einem der Ansprüche 15 bis 21 erhältlich ist, und bei Raumtemperatur flüssig oder leicht schmelzbar ist und das im wesentlichen frei von Lösungsmitteln ist, in eine Form in Abwesenheit oder Gegenwart eines zusätzlichen vinylischen Comonomers und Ergänzen mit einem Photostarter,
b) Starten des Photovernetzens,
c) Öffnen der Form, so daß der Formgegenstand aus der Form entnommen werden kann.

23. Verfahren nach Anspruch 22, dadurch gekennzeichnet, daß das Verfahren in Abwesenheit eines zusätzlichen vinylischen Comonomers ausgeführt wird.

24. Verfahren zur Herstellung eines Formlings, dadurch gekennzeichnet, daß es die nachstehenden Schritte umfaßt:
a) Herstellen eines wasserlöslichen Prepolymers, das gemäß einem der Ansprüche 15 bis 21 erhältlich ist, in einer im wesentlichen wässerigen Lösung in Abwesenheit oder Gegenwart eines zusätzlichen vinylischen Comonomers und Ergänzen mit einem Photostarter,
b) Einführen der erhaltenen Lösung in eine Form,
c) Starten des Photovernetzens,
d) Öffnen der Form, so daß der Formgegenstand aus der Form entnommen werden kann.

25. Verfahren nach Anspruch 24, dadurch gekennzeichnet, daß das Verfahren in Abwesenheit eines zusätzlichen vinylischen Comonomers ausgeführt wird.

26. Verfahren nach einem der Ansprüche 22 bis 25, dadurch gekennzeichnet, daß der in Frage kommende Formling eine Kontaktlinse ist.

27. Formling, insbesondere Kontaktlinse, erhältlich durch das Verfahren nach einem der Ansprüche 22 bis 25.

28. Kontaktlinse nach Anspruch 27, dadurch gekennzeichnet, daß sie ohne Extraktion für die vorgesehene Verwendung geeignet ist.

## Revendications

1. Un moulage ophtalmique qui peut être obtenu par réticulation d'un prépolymère qui est le produit de copolymérisation de
(a) au moins un polyalkylèneglycol de formule
HO-(CH₂-CH₂-O)ₙ-(CHY₁-CHY₂-O)ₘ-(CHY₃-CHY₄-O)ₚ-H (1)
ou
HO-[(CH₂-CH₂-CH₂-CH₂-O-]_{q}-H (1),
où un des radicaux Y₁ et Y₂ signifie un groupe méthyle et l'autre signifie l'hydrogène,
un des radicaux Y₃ et Y₄ signifie un groupe éthyle et l'autre signifie l'hydrogène, q signifie un nombre de 1 à 50, et n, m et p, indépendamment les uns des autres, signifient chacun un nombre de 0 à 100, où la somme (n+m+p) signifie de 5 à 100,
(b) au moins un composé polyhydroxy choisi parmi le groupe comprenant
(i) un composé polyhydroxy aliphatique linéaire ou ramifié de formule
R₁-(OH)ₓ (2),
où R₁ signifie le radical d'un alcool aliphatique linéaire ou ramifié multifonctionnel et x signifie un nombre ≥ 3,
(ii) un polyéther-polyol, qui est le produit de polymérisation d'un composé de formule (2) et d'un glycol,
(iii) un polyester-polyol, qui est le produit de polymérisation d'un composé de formule (2), d'un acide dicarboxylique ou d'un de ses dérivés et d'un diol, et
(iv) un polyol cycloaliphatique choisi parmi le groupe comprenant un groupe C₅-C₈-cycloalcane, qui est substitué par ≥ 3 groupes hydroxy, et un mono- et disaccharide non substitué,
(c) au moins un di- ou polyisocyanate de formule
R₂-(NCO)_{y} (3)
où R₂ signifie le radical d'un di- ou polyisocyanate aliphatique, cycloaliphatique, aliphatique-cycloaliphatique, aromatique ou araliphatique et y signifie un nombre de 2 à 6,
(d) au moins un monoisocyanate éthyléniquement insaturé de formule 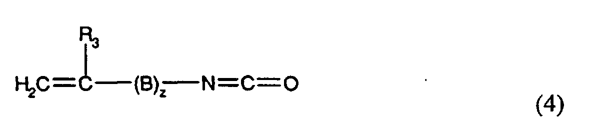 ou un halogénure d'acide éthyléniquement insaturé de formule 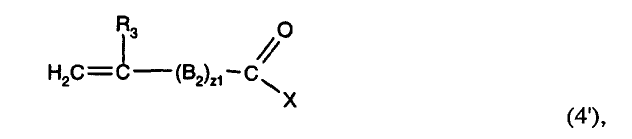 où R₃ signifie l'hydrogène ou un groupe méthyle, z et z1, indépendamment l'un de l'autre, signifient chacun le nombre 0 ou 1, B signifie un groupe C₁-C₆-alkylène, ou phénylène ou C₇-C₁₂-aralkylène, chacun étant non substitué ou substitué par un groupe C₁-C₄-alkyle ou C₁-C₄-alcoxy, ou un radical de formule 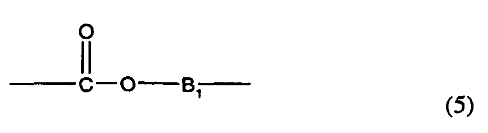 B₁ signifie un groupe C₂-C₁₂-alkylène linéaire ou ramifié qui est éventuellement interrompu par un ou plusieurs atomes d'oxygène, B₂ signifie un groupe C₁-C₆-alkylène et X signifie un halogène,
et éventuellement un ou plusieurs autres monomères copolymérisables, en l'absence ou en présence d'un comonomère vinylique supplémentaire.

2. Un moulage ophtalmique selon la revendication 1, caractérisé en ce que l'article en question est une lentille de contact.

3. Un moulage ophtalmique selon la revendication 1, caractérisé en ce qu'on peut l'obtenir par réticulation d'un prépolymère qui est le produit de copolymérisation des composants (a), (b), (c) et (d) donnés à la revendication 1, en l'absence ou en présence d'un comonomère vinylique supplémentaire.

4. Un moulage ophtalmique selon l'une des revendications 1 à 3, caractérisé en ce que le composant (a) est un polyalkylèneglycol de formule (1), où p signifie 0, n et m, indépendamment l'un de l'autre, signifent chacun un nombre de 0 à 50, et la somme (n+m) est de 8 à 50.

5. Un moulage ophtalmique selon l'une des revendications 1 à 4, caractérisé en ce que le composant (b) est un composé de formule (2), où R₁ signifie le radical d'un polyol aliphatique ayant de 3 à 12 atomes de carbone, et x signifie un nombre de 3 à 8.

6. Un moulage ophtalmique selon l'une des revendications 1 à 5, caractérisé en ce que le composant (b) est le glycérol, le diglycérol, le triglycérol, le 1,1,1-trishydroxyméthyléthane, le 1,1,1-trishydroxyméthylpropane, le 1,2,4-butanetriol, le 1,2,6-hexanetriol, l'érythritol, le pentaérythritol, le di- ou tripentaérythritol, l'arabitol, le sorbitol, le disorbitol ou le mannitol ou un mélange de deux ou de plusieurs desdits polyols.

7. Un moulage ophtalmique selon l'une des revendications 1 à 6, caractérisé en ce que le polyisocyanate selon (c) est un composé de formule
OCN-R₂-NCO, (3a),
où R₂ signifie un groupe C₃-C₁₈-alkylène linéaire ou ramifié, ou un groupe C₆-C₁₀arylène, C₇-C₁₈-aralkylène, C₆-C₁₀-arylène-C₁-C₂-alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène non substitués ou C₁-C₄alkyl-substitués ou C₁-C₄alcoxy-substitués.

8. Un moulage ophtalmique selon la revendication 7, caractérisé en ce que R₂ signifie un groupe C₆-C₁₀-alkylène linéaire ou ramifié, cyclohexylène-méthylène ou cyclohexylène-méthylène-cyclohexylène qui sont non substitués ou substitués dans le reste cyclohexyle par 1 à 3 groupes méthyle, ou phénylène ou phénylène-méthylène-phénylène qui sont non substitués ou bien substitués dans le reste phényle par un groupe méthyle.

9. Un moulage ophtalmique selon l'une des revendications 1 à 8, caractérisé en ce que le di- ou polyisocyanate selon (c) est le diisocyanate d'isophorone, le 2,4-diisocyanate de toluylène, le méthylènebis(isocyanate de cyclohexyle), le 1,6-diisocyanato-2,2,4-triméthyl-n-hexane, le méthylènebis(isocyanate de phényle) ou le diisocyanate d'hexaméthylène.

10. Un moulage ophtalmique selon l'une des revendications 1 à 9, caractérisé en ce que le composant (d) est un monoisocyanate de formule (4), où z signifie le nombre 1, et B signifie un radical de formule (5) donné à la revendication 1, où B₁ signifie un groupe C₂-C₈-alkylène linéaire ou ramifié.

11. Un moulage ophtalmique selon la revendication 1, qui peut être obtenu par réticulation d'un prépolymère qui est le produit de copolymérisation de
(a) un ou plusieurs polyalkylèneglycols de formule
HO-(CH₂-CH₂-O)ₙ-(CHY₁-CHY₂-O)ₘ-H (1a),
où un des radicaux Y₁ et Y₂ signifie un groupe méthyle et l'autre radical signifie l'hydrogène,
et n et m, indépendamment l'un de l'autre, signifient chacun un nombre de 0 à 50, où la somme (n+m) signifie de 8 à 50,
(b) (i) un ou plusieurs composés polyhydroxy de formule
R₁-(OH)ₓ (2)
où R₁ signifie le radical d'un alcool aliphatique multi-functionnel et x signifie un nombre de 3 à 8,
(c) un ou plusieurs diisocyanates de formule
OCN-R₂-NCO (3a),
où R₂ signifie un groupe C₃-C₁₈-alkylène linéaire ou ramifié ou un groupe C₆-C₁₀-arylène, C₇-C₁₈-aralkylène, C₆-C₁₀-arylène-C₁-C₂-alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène non substitués ou C₁-C₄-alkyl-substitués ou C₁-C₄-alcoxy-substitués, et
(d) un ou plusieurs composés éthyléniquement insaturés de formule 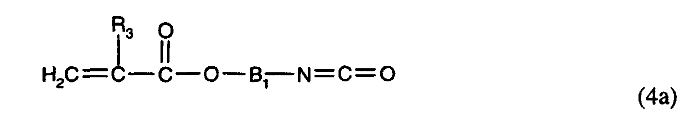 ou 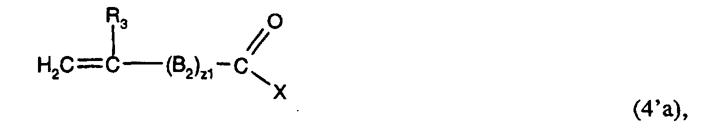 où R₃ signifie l'hydrogène ou un groupe méthyle, B₁ signifie un groupe C₂-C₈-alkylène linéaire ou ramifié, B₂ signifie un groupe C₁-C₄-alkylène, z1 signifie le nombre 0 ou 1 et X représente un halogène,
en l'absence ou en présence d'un comonomère vinylique supplémentaire.

12. Un moulage ophtalmique selon la revendication 1, qui peut être obtenu par réticulation d'un prépolymère qui est le produit de copolymérisation de
(a) un ou plusieurs polyalkylèneglycols de formule
HO-(CH₂-CH₂-O)ₙ-(CHY₁-CHY₂-O)ₘ-H (1a),
où un des radicaux Y₁ et Y₂ signifie un groupe méthyle et l'autre radical signifie l'hydrogène,
et n et m, indépendamment l'un de l'autre, signifient chacun un nombre de 0 à 25, où la somme (n+m) signifie de 9 à 25,
(b) un ou plusieurs composés polyhydroxy choisis parmi le groupe comprenant le glycérol, le diglycérol, le triglycérol, le 1,1,1-trishydroxyméthyléthane, le 1,1,1-trishydroxyméthylpropane, le 1,2,4-butanetriol, le 1,2,6-hexanetriol, l'érythritol, le pentaérythritol, le di- ou tripentaérythritol, l'arabitol, le sorbitol, le disorbitol et le mannitol et leurs mélanges,
(c) un diisocyanate de formule
OCN-R₂-NCO (3a),
où R₂ signifie un groupe C₆-C₁₀-alkylène linéaire ou ramifié, cyclohexylène-méthylène ou cyclohexylène-méthylène-cyclohexylène non substitués ou substitués dans le reste cyclohexyle par 1 à 3 groupes méthyle, ou bien phénylène ou phénylène-méthylène-phénylène non substitués ou substitués dans le reste phényle par un groupe méthyle, et
(d) un monoisocyanate éthyléniquement insaturé de formule 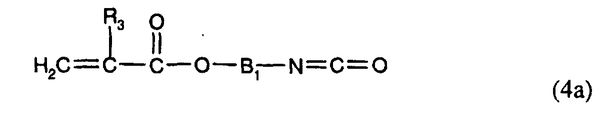 où R₃ signifie l'hydrogène ou un groupe méthyle et B₁ signifie un groupe C₂-C₄-alkylène linéaire,
en l'absence ou en présence d'un comonomère vinylique supplémentaire.

13. Un moulage ophtalmique selon l'une des revendications 1 à 12, caractérisé en ce que la réticulation du prépolymère s'effectue en l'absence d'un comonomère vinylique supplémentaire.

14. Un moulage ophtalmique selon l'une des revendications 1 à 12, caractérisé en ce que le prépolymère sous forme substantiellement pure est photoréticulé à l'aide d'un photoinitiateur, ou dans une solution aqueuse, en l'absence d'un comonomère vinylique supplémentaire.

15. Un prépolymère qui est le produit de copolymérisation des composants (a), (b), (c) et (d) donnés à la revendication 1.

16. Un prépolymère selon la revendication 15, qui est le produit de copolymérisation de
(a) un ou plusieurs polyalkylèneglycols de formule
HO-(CH₂-CH₂-O)ₙ-(CHY₁-CHY₂-O)ₘ-H (1a),
où un des radicaux Y₁ et Y₂ signifie un groupe méthyle et l'autre radical signifie l'hydrogène,
et n et m, indépendamment l'un de l'autre, signifient chacun un nombre de 0 à 50, où la somme (n+m) signifie de 8 à 50,
(b) (i) un ou plusieurs composés polyhydroxy de formule
R₁-(OH)ₓ (2)
où R₁ signifie le radical d'un alcool aliphatique ou cycloaliphatique multi-functionnel et x signifie un nombre de 3 à 8,
(c) un ou plusieurs diisocyanates de formule
OCN-R₂-NCO (3a)
où R₂ signifie un groupe C₃-C₁₈-alkylène linéaire ou ramifié ou un groupe C₆-C₁₀-arylène, C₇-C₁₈-aralkylène, C₆-C₁₀-arylène-C₁-C₂-alkylène-C₆-C₁₀-arylène, C₃-C₈-cycloalkylène, C₃-C₈-cycloalkylène-C₁-C₆-alkylène, C₃-C₈-cycloalkylène-C₁-C₂-alkylène-C₃-C₈-cycloalkylène ou C₁-C₆-alkylène-C₃-C₈-cycloalkylène-C₁-C₆-alkylène, non substitués ou C₁-C₄-alkyl-substitués ou C₁-C₄-alcoxy-substitués, et
(d) un ou plusieurs composés éthyléniquement insaturés de formule 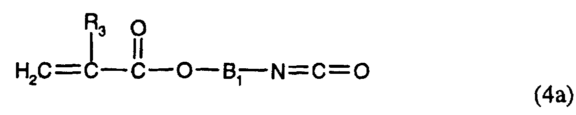 ou 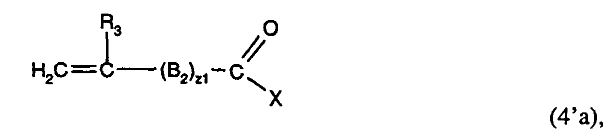 où R₃ signifie l'hydrogène ou un groupe méthyle, B₁ signifie un groupe C₂-C₈-alkylène linéaire ou ramifié, B₂ signifie un groupe C₁-C₄-alkylène, z1 signifie le nombre 0 ou 1 et X représente un halogène.

17. Un prépolymère selon la revendication 15, qui est le produit de copolymérisation de
(a) un ou plusieurs polyalkylèneglycols de formule
HO-(CH₂-CH₂-O)ₙ-(CHY₁-CHY₂-O)ₘ-H (1a),
où un des radicaux Y₁ et Y₂ signifie un groupe méthyle et l'autre radical signifie l'hydrogène,
et n et m, indépendamment l'un de l'autre, signifient chacun un nombre de 0 à 25, où la somme (n+m) signifie de 9 à 25,
(b) un ou plusieurs composés polyhydroxy choisis parmi le groupe glycérol, diglycérol, triglycérol, 1,1,1-trishydroxyméthyléthane, 1,1,1-trishydroxyméthylpropane, 1,2,4-butanetriol, 1,2,6-hexanetriol, érythritol, pentaérythritol, di- ou tripentaérythritol, arabitol, sorbitol, disorbitol et mannitol ou leurs mélanges,
(c) un diisocyanate de formule
OCN-R₂-NCO (3a),
où R₂ signifie un groupe C₆-C₁₀-alkylène linéaire ou ramifié, cyclohexylène-méthylène ou cyclohexylène-méthylène-cyclohexylène non substitués ou substitués dans le reste cyclohexyle par 1 à 3 groupes méthyle, ou bien phénylène ou phénylène-méthylène-phénylène non substitués ou substitués dans le reste phényle par un groupe méthyle, et
(d) un monoisocyanate éthyléniquement insaturé de formule 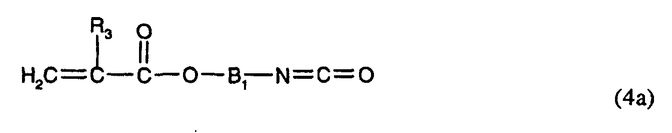 où R₃ signifie l'hydrogène ou un groupe méthyle et B₁ signifie un groupe C₂-C₄-alkylène linéaire ou ramifié.

18. Un procédé de production d'un prépolymère selon la revendication 15, caractérisé en ce que les composants (a), (b), (c) et (d) donnés à la revendication 1, sont mis à réagir ensemble, dans n'importe quelle séquence, dans un solvant inerte à une température de -5°C à 150°C.

19. Un procédé selon la revendication 18, caractérisé en ce qu'un mélange des composants (a) et (b) est mis à réagir avec un mélange des composants (c) et (d) ou bien tout d'abord avec un composant (c) et ensuite avec un composant (d).

20. Un procédé selon la revendication 18, caractérisé en ce qu'un mélange de 1 équivalent de OH d'un composant (a) et de 0,05 à 1 équivalent de OH d'un composant (b) est mis à réagir dans un solvant inerte à une température de 0 à 100°C en présence d'un catalyseur soit avec un mélange de 0,5 à 1,95 équivalent de NCO d'un composant (c) et de 0,1 à 2 équivalents de NCO ou d'un halogénure d'acide d'un composant (d) ou tout d'abord avec de 0,5 à 1,95 équivalent de NCO d'un composant (c) et ensuite avec de 0,1 à 2 équivalents de NCO ou d'un halogénure d'acide d'un composant (d) .

21. Un procédé selon la revendication 18, caractérisé en ce qu'un mélange de 1 équivalent de OH d'un composant (a) et de 0,1 à 0,8 équivalent de OH d'un composant (b) est mis à réagir dans un solvant inerte à une température de 0 à 80°C, en présence d'un catalyseur choisi parmi le groupe des sels métalliques d'acides carboxyliques organiques et d'une amine tertiaire, tout d'abord avec de 0,6 à 1,5 équivalent de NCO d'un composant (c) et ensuite avec de 0,1 à 1,5 équivalent de NCO ou d'un halogénure d'acide d'un composant (d).

22. Un procédé de production d'un moulage, caractérisé en ce qu'il comprend les étapes suivantes:
a) on introduit un prépolymère qui peut être obtenu selon l'une des revendications 15 à 21 et est liquide ou fond facilement à la température ambiante et qui est essentiellement exempt de solvant, dans un moule, en l'absence ou en présence d'un comonomère vinylique supplémentaire, et on complète avec un photoinitiateur,
b) on déclenche la photoréticulation,
c) on ouvre le moule, pour pouvoir retirer l'article moulé du moule.

23. Un procédé selon la revendication 22, caractérisé en ce que le procédé est effectué en l'absence d'un comonomère vinylique supplémentaire.

24. Un procédé de production d'un moulage, caractérisé en ce qu'il comprend les étapes suivantes:
a) on produit un prépolymère soluble dans l'eau qui peut être obtenu selon l'une des revendications 15 à 21, dans une solution essentiellement aqueuse, en l'absence ou en présence d'un comonomère vinylique supplémentaire et on complète avec un photoinitiateur,
b) on introduit la solution obtenue dans un moule,
c) on déclenche la photoréticulation,
d) on ouvre le moule, pour pouvoir retirer l'article moulé du moule.

25. Un procédé selon la revendication 24, caractérisé en ce que le procédé est effectué en l'absence d'un comonomère vinylique supplémentaire.

26. Un procédé selon l'une des revendications 22 à 25, caractérisé en ce que le moulage en question est une lentille de contact.

27. Un moulage, spécialement une lentille de contact, pouvant être obtenue selon le procédé selon l'une des revendications 22 à 25.

28. Une lentille de contact selon la revendication 27, caractérisée en ce qu'elle est appropriée pour son utilisation envisagée, sans extraction.
